(19) **Europäisches Patentamt / European Patent Office / Office européen des brevets**

(11) **EP 2 674 447 B1**

(12) **EUROPEAN PATENT SPECIFICATION**

(45) Date of publication and mention of the grant of the patent:
**05.10.2016 Bulletin 2016/40**

(51) Int Cl.:
*C08J 5/04* (2006.01)     *B32B 5/28* (2006.01)

(21) Application number: **12745370.2**

(22) Date of filing: **01.02.2012**

(86) International application number:
**PCT/JP2012/052795**

(87) International publication number:
**WO 2012/108446 (16.08.2012 Gazette 2012/33)**

(54) **MOLDED OBJECT WITH THICKNESS GRADIENT AND PROCESS FOR PRODUCING SAME**

FORMKÖRPER MIT DICKE-GRADIENT UND VERFAHREN ZU SEINER HERSTELLUNG

OBJET MOULÉ PRÉSENTANT UN GRADIENT D'ÉPAISSEUR ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2011 JP 2011023968**
**29.06.2011 JP 2011144423**

(43) Date of publication of application:
**18.12.2013 Bulletin 2013/51**

(73) Proprietor: **Teijin Limited**
**Osaka-shi, Osaka 541-0054 (JP)**

(72) Inventors:
- **TANIGUCHI, Michiharu**
  **Gotemba-shi, Shizuoka 412-0048 (JP)**
- **SATO, Masaru**
  **Gotemba-shi, Shizuoka 412-0048 (JP)**
- **SUZUKI, Koji**
  **Ehime 791-8044 (JP)**
- **SUGIYAMA, Toru**
  **Gotemba-shi, Shizuoka 412-0048 (JP)**
- **NAGAKURA, Yasunori**
  **Gotemba-shi, Shizuoka 412-0048 (JP)**
- **ARAKAWA, Motoomi**
  **Gotemba-shi, Shizuoka 412-0048 (JP)**

(74) Representative: **Hallybone, Huw George**
**Carpmaels & Ransford LLP**
**One Southampton Row**
**London WC1B 5HA (GB)**

(56) References cited:
EP-A1- 1 927 618          EP-A1- 2 682 418
EP-A1- 2 716 433          JP-A- 2 225 533
JP-A- 10 016 103          JP-A- 56 164 842
JP-A- 2007 291 204        JP-A- 2010 253 938

- HARPER L T ET AL: "Characterisation of random carbon fibre composites from a directed fibre preforming process: The effect of fibre length", COMPOSITES PART A: APPLIED SCIENCE AND MANUFACTURING, ELSEVIER SCIENCE PUBLISHERS B.V., AMSTERDAM, NL, vol. 37, no. 11, 1 November 2006 (2006-11-01), pages 1863-1878, XP028012970, ISSN: 1359-835X, DOI: 10.1016/J.COMPOSITESA.2005.12.028 [retrieved on 2006-11-01]
- HARPER ET AL: "Characterisation of random carbon fibre composites from a directed fibre preforming process: The effect of tow filamentisation", COMPOSITES PART A: APPLIED SCIENCE AND MANUFACTURING, ELSEVIER SCIENCE PUBLISHERS B.V., AMSTERDAM, NL, vol. 38, no. 3, 15 December 2006 (2006-12-15), pages 755-770, XP005805613, ISSN: 1359-835X, DOI: 10.1016/J.COMPOSITESA.2006.09.008

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a molded product having thickness gradient including a fiber-reinforced composite material containing reinforcing fibers having an average fiber length of from 5 mm to 100 mm and a thermoplastic resin, and a method for manufacturing the molded product. Particularly, the invention relates to a molded product in which isotropy of reinforcing fiber is maintained.

Background Art

A fiber-reinforced composite material using a carbon fiber, an aramide fiber or a glass fiber as a reinforcing fiber has been widely utilized as a structure material of aircrafts, automobiles and the like, and in uses of general industrial sports such as tennis rackets, golf shafts and fishing rods, utilizing its high specific strength and specific modulus.

A technique of obtaining molded products having various shapes by injection molding a composite material including a thermoplastic resin as a matrix into long-fiber pellets containing reinforcing fibers is proposed (Patent Document 1). However, even the long-fiber pellets have a limited length. Furthermore, the reinforcing fibers break in the thermoplastic resin by kneading. Therefore, a weight average fiber length of reinforcing fibers in a molded product has been from about 0.1 mm to 1 mm. Additionally, the reinforcing fibers tend to be oriented in a molding method by such injection molding, and there has been the problem that an isotropic molded product is difficult to be obtained.

On the other hand, a stamping molding material obtained by heating and pressuring a composite layered body including a glass fiber sheet form containing a thermoplastic resin to mold the composite layered body in a sheet form, and a method for manufacturing the same are disclosed (Patent Document 2). According to this, a cubic molded product having thickness gradient may be manufactured by integral molding in a short tact. However, fibers and a resin are greatly fluidized in a mold in such thermoplastic stamping molding. As a result, fiber orientation is generated, and it has been difficult to obtain a molded product having thermal and mechanical isotropy.

Patent Document 3 proposes a method for manufacturing an integrated molded product by integrating, by injection molding, a molded product of a thermoplastic resin having complicated shape with a molded product including discontinuous reinforcing fibers and a resin, which is obtained by press molding for suppressing fluidization in order to maintain isotropy of fibers in a material. This method may obtain an integrated molded product having a complicated shape and further having isotropic characteristics. However, an injection molded body has reinforcing fibers in short length. Therefore, the injection molded body has low mechanical strength as compared with a press molded body, and may not be used in a part requiring strength. For this reason, design of a molded product is limitative, and usable parts of an injection molded body are limited.

Patent document 4 relates to a shaped product constituted by a fiber-reinforced composite material in which discontinuous reinforcing fibers are isotropic in a plane and are two-dimensionally oriented in the thermoplastic resin, the reinforcing fibers contained in the shaped product includes a reinforcing fiber bundle (A) constituted by the reinforcing fibers of the critical single fiber number defined by formula (1) or more, a ratio of the reinforcing fiber bundle (A) to the total amount of the reinforcing fibers in the shaped product is 20 vol% or more and less than 90 vol%, and the average number (N) of the reinforcing fibers in the reinforcing fiber bundle (A) satisfies formula (2): wherein D is an average fiber diameter ($\mu$m) of the reinforcing fibers.

Patent document 5 relates to a method for manufacturing a shaped product constituted by a fiber-reinforced composite material including reinforcing fibers and a thermoplastic resin, the shaped product with maintained isotropy of the fibers to the end thereof even if press-molded under conditions in which charge ratio of a prepreg to a die is low.

Patent document 6 describes an isotropic fiber-reinforced thermoplastic resin sheet wherein a chopped strand prepreg comprising a thermoplastic resin and a reinforcing fiber is layered so that the fiber orientation is random, the prepreg having a fiber volume fraction (Vf) of 20 % to 50 %, a length in the fiber axis direction of 15 to 45 mm, and a thickness of no greater than 0.13 mm, and the layered material is molded into sheet form by heating and pressing.

Non-Patent document 1 relates to an effect of fibre length on the tensile properties of 2D random carbon fibre composites.
Non-Patent document 2 relates to an effect of induced tow filamentisation on preform loft preform compaction and laminate tensile properties is examined for a directed fibre preforming process using random, discontinuous carbon fibres.
Patent Document 1: JP-A-2002-67070
Patent Document 2: JP-A-10-193350
Patent Document 3: JP-A-2010-253938
Patent document 4: EP2682418 A1

Patent document 5: EP2716433 A1
Patent document 6: EP1927618 A1

Non-Patent document 1: HARPER L T ET AL: "Characterisation of random carbon fibre composites from a directed fibre preforming process: The effect of fibre length", COMPOSITES PART A: APPLIED SCIENCE AND MANUFACTURING, ELSEVIER SCIENCE PUBLISHERS B.V, AMSTERDAM, NL, vol. 37, no. 11, 1 November 2006 (2006-11-01), pages 1863-1878, XP028012970, ISSN: 1359-835X, DOI: 10.1016/J.COMPOSITESA.2005.12.028
Non-Patent document 2: HARPER ET AL: "Characterisation of random carbon fibre composites from a directed fibre preforming process: The effect of tow filamentisation", COMPOSITES PART A: APPLIED SCIENCE AND MANUFACTURING, ELSEVIER SCIENCE PUBLISHERS B.V., AMSTERDAM, NL, vol. 38, no. 3, 15 December 2006 (2006-12-15), pages 755-770, XP005805613, ISSN: 1359-835X, DOI: 10.1016/J.COMPOSITESA.2006.09.008

Disclosure of the Invention

Problems that the Invention is to Solve

An object of the present invention is to provide a molded product having thickness gradient, including a fiber-reinforced composite material containing reinforcing fibers having an average fiber length of from 5 mm to 100 mm and a thermoplastic resin. The present invention further provides a molded product in which isotropy of fibers may be maintained even in regions having different thickness, and a constant fiber content is maintained in each region.

Means for Solving the Problems

The present inventors have found that when a random mat including reinforcing fibers and a thermoplastic resin is used and press-molded with a mold having thickness gradient provided thereon, a molded product having different thickness, including a fiber-reinforced composite material containing reinforcing fibers having an average fiber length of from 10 mm to 100 mm and a thermoplastic resin may be provided.
That is, the present invention is a molded product having thickness gradient, including a fiber-reinforced composite material containing reinforcing fibers having an average fiber length of from 10 mm to 100 mm and a thermoplastic resin, wherein the amount of the thermoplastic resin is from 50 to 1,000 parts by weight per 100 parts by weight of the reinforcing fibers, the reinforcing fibers contain a reinforcing fiber bundle (A) comprising the reinforcing fibers of a critical single fiber number defined by formula (1) or more, a ratio of the reinforcing fiber bundle (A) to the total amount of the reinforcing fiber bundle is 30 vol% or more and less than 90 vol%:

$$\text{Critical single fiber number} = 600/D \qquad (1)$$

wherein D is an average fiber diameter ($\mu$m) of single reinforcing fibers, and the reinforcing fibers have a fiber areal weight of from 25 to 3,000 g/m$^2$ and are substantially two-dimensionally randomly oriented, wherein the reinforcing fibers are carbon fibers,
wherein an average number (N) of fibers in the reinforcing fiber bundle (A) satisfies formula (2):

$$0.7 \times 10^4/D^2 < N < 6 \times 10^4/D^2 \qquad (2)$$

wherein D is an average fiber diameter ($\mu$m) of the reinforcing fibers, and wherein a ratio obtained by dividing larger value by smaller value, of reinforcing fiber volume fraction (Vf) in each region having different thickness, is 1.0 to 1.2.
The present invention further relates to a method for manufacturing the molded product having thickness gradient. The present invention includes a method for manufacturing a molded product having thickness gradient in which isotropy is maintained, by using a random mat including a fiber-reinforced composite material containing reinforcing fibers satisfying specific degree of opening and a thermoplastic resin.

Advantage of the Invention

The molded product of the present invention is a high rigidity molded product including a fiber-reinforced composite material containing reinforcing fibers having an average fiber length of from 10 mm to 100 mm and a thermoplastic resin. The present invention may provide a molded product having parts having different thickness in at least a portion thereof, having small thickness, lightweight and excellent design, and having a complicated three-dimensional shape while maintaining isotropy. The present invention enables obtaining a molded product having good shape follow-up property to a complicated shape and molding into a molded product having a desired thickness in portions having different thickness even though small thickness. Furthermore, the present invention may obtain a molded product having substantially the same fiber content in any portion thereof.

The present invention may manufacture a molded product in a short period of time. Furthermore, the present invention may manufacture a molded product having different thickness and having a complicated three-dimensional shape in high productivity by reducing retention time in a mold in the case of cold pressing and by omitting a step of impregnation with a thermoplastic resin in the case of hot pressing. The present invention may preferably provide casings for electric and electronic equipments, parts for automobiles and parts for general industries.

Brief Description of the Drawings

Fig. 1 is schematic views of a mold and a base material arrangement in the mold in Examples 1, and 5 to 7, and Comparative Example 1.
Fig. 2 is a schematic view (perspective view) of a molded product obtained in Examples 1, and 5 to 7, and Comparative Example 1.
Fig. 3 is schematic views of a mold and a base material arrangement in the mold in Example 2.
Fig. 4 is a schematic view (perspective view) of a molded product obtained in Example 2.
Fig. 5 is schematic views of a mold and a base material arrangement to a mold in Example 3.
Fig. 6 is a schematic view (perspective view) of a molded product obtained in Example 3.
Fig. 7 is schematic views of a mold and a base material arrangement in the mold in Example 4.
Fig. 8 is a schematic view (perspective view) of a molded product obtained in Example 4.
Fig. 9 is schematic views of a mold and a base material arrangement in the mold in Example 8.
Fig. 10 is a schematic view (perspective view) of a molded product obtained in Example 8.
Fig. 11 is schematic views of a mold and a base material arrangement in the mold in Example 9.
Fig. 12 is a schematic view (perspective view) of a molded product obtained in Example 9.
Fig. 13 is schematic views of a mold and a base material arrangement in the mold in Example 10.
Fig. 14 is a schematic view (perspective view) of a molded product obtained in Example 10.

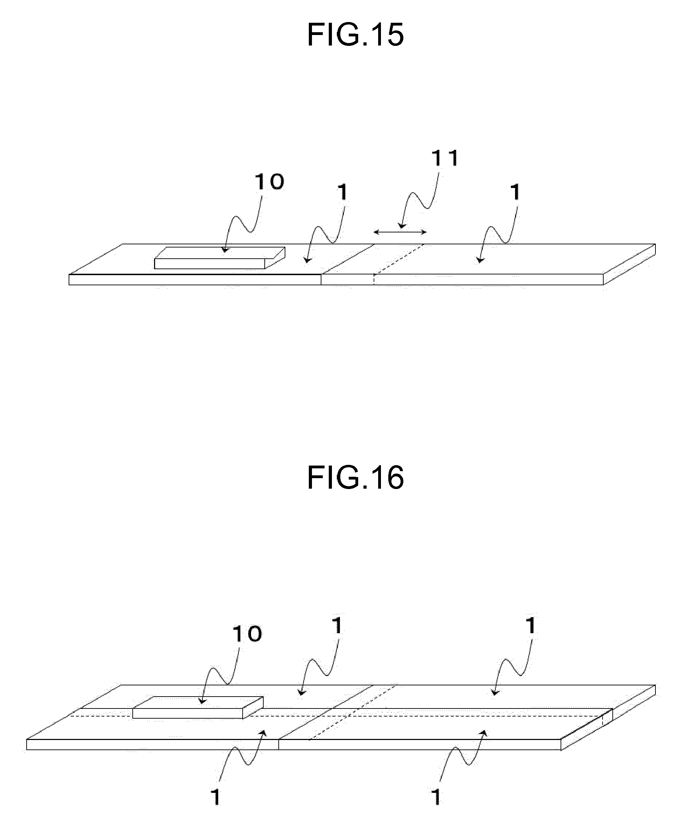

Fig. 15 is one conceptual view of the embodiment.
Fig. 16 is one conceptual view of the embodiment.
Fig. 17 is schematic views of a partial material and a base material in Example 11.
Fig. 18 is a schematic view (perspective view) of a molded product obtained in Example 11.
Fig. 19 is schematic views of a partial material and a base material in Example 12.
Fig. 20 is a schematic view (perspective view) of a molded product obtained in Example 12.
Fig. 21 is schematic views of a partial material and a base material in Example 13.
Fig. 22 is a schematic view (perspective view) of a molded product obtained in Example 13.
Fig. 23 is a schematic view of the case where the molded product in Example 13 has been used as a dashboard for vehicles.
Fig. 24 is an explanatory view of a share edge structure of a mold.

Description of Reference Numerals and Signs

1    Prepreg
2    Mold cavity
3    Mold cavity edge portion
4    Base material charge part
5    Fluidizing part
6A   Measurement point of Vf in minimum thickness part
6B   Measurement point of Vf in maximum thickness part
7A   Measurement point of tensile modulus in minimum thickness part
7B   Measurement point of tensile modulus in maximum thickness part
8    Boss-shaped part
9    Rib-shaped part

10   Partial material
11   Lap margin
12   Unidirectional material layer
13   Dashboard for vehicles
14   Angle of share of mold
15   Clearance of mold

Mode for Carrying out the Invention

The embodiments of the present invention are sequentially described below, but the present invention is not limited to those.

[Molded product]

The molded product of the present invention is a molded product having thickness gradient including a fiber-reinforced composite material containing reinforcing fibers having an average fiber length of from 5 mm to 100 mm and a thermoplastic resin, wherein the amount of the thermoplastic resin contained is 10 to 1,000 parts by weight per 100 parts by weight of the reinforcing fibers, and the reinforcing fibers have a fiber areal weight of from 25 to 3,000 $g/m^2$ and are substantially two-dimensionally randomly oriented. The thickness gradient means that a thickness of a molded product is changed by a portion. Specifically, a ratio of maximum thickness to minimum thickness exceeds 1 and is 10 or less. The ratio of maximum thickness to minimum thickness is preferably from 1.2 to 5, and more preferably from 1.2 to 3. The molded product of the present invention may have small thickness. The substantial minimum thickness is from 0.2 mm to 10 mm, and the substantial maximum thickness is from 0.3 mm to 30 mm. The term "having thickness gradient" means that a molded product having a complicated shape such that thicknesses differ depending on respective portions is obtained with good shape follow-up property, and does not mean thickness irregularity. For example, even in a molded product having small thickness, it has an object to obtain a molded product having the desired thickness in the respective portions having different thickness. The portion in which a thickness changes may have stepwise change, may have linear gradient change and may have heterogeneous change. The portion having thickness change may be only one side, and may be both sides.

The amount of the thermoplastic resin contained in the fiber-reinforced composite material is from 50 to 1,000 parts by weight, and more preferably from 50 to 500 parts by weight, per 100 parts by weight of the reinforcing fibers.

The reinforcing fibers are discontinuous, and an average fiber length of the reinforcing fibers is from 5 mm to 100 mm. The average fiber length of the reinforcing fibers is preferably from 10 mm to 50 mm, and more preferably 10 mm to 30 mm. The length of the reinforcing fibers constituting a random mat may be a fixed length by employing a preferable cutting method of the reinforcing fibers described hereinafter.

Reinforcing fiber volume fraction (Vf=100 $\times$ volume of reinforcing fibers/(volume of reinforcing fibers + volume of thermoplastic resin)) in the fiber-reinforced composite material is preferably from 5% to 80%. Where the reinforcing fiber volume fraction is lower than 5%, reinforcing effect may not be sufficiently developed. On the other had, where the reinforcing fiber volume fraction exceeds 80%, voids are easy to be generated in the molded product obtained, and there is a possibility that physical properties of the molded product are deteriorated. The reinforcing fiber volume fraction is more preferably 20% to 60%.

The molded product of the present invention is possible to be a molded product in which the reinforcing fiber volume fraction (Vf) is substantially equal in each region having thickness gradient, and is possible to be a molded product in which the reinforcing fiber content has gradient. Thus, the form of the reinforcing fiber content may be appropriately selected in conformity to uses of a molded product to be obtained. It is preferred that Vf is almost the same as that of other portions for the purpose of constant fiber reinforcing even in each portion having thickness gradient. The term "Vf is almost the same in each portion" specifically means that a ratio obtained by dividing larger value by smaller value is from 1.0 to 1.2. Preferred embodiment of the molded product of the present invention is that the ratio obtained by dividing larger value by smaller value, of the reinforcing fiber volume fraction (Vf) in each portion having different thickness, is from 1.0 to 1.2.

[Reinforcing fibers constituting fiber-reinforced composite material]

The reinforcing fibers included in the fiber-reinforced composite material in the molded product of the present invention contains a reinforcing fiber bundle (A) constituted by the reinforcing fibers of a critical single fiber number defined by formula (1) or more, a ratio of the reinforcing fiber bundle (A) to the the total amount of the reinforcing fibers is 20 vol% to 99 vol%:

$$\text{Critical single fiber number} = 600/D \qquad (1)$$

wherein D is an average fiber diameter ($\mu$m) of single reinforcing fibers. Where the proportion of the reinforcing fiber bundle (A) to the total amount of the reinforcing fibers is less than 20 vol%, there is an advantage that a molded product having excellent surface quality is obtained, but a molded product having excellent mechanical properties is difficult to be obtained. Where the proportion of the reinforcing fiber bundle (A) exceeds 99 vol%, a thickness of crossing parts of fibers is locally increased, and a molded product having small thickness is difficult to be obtained. The proportion of the reinforcing fiber bundle (A) is preferably 30 vol% or more, and less than 90 vol%, and more preferably 30 vol% or more and less than 80 vol%.

Alternatively expressing the reinforcing fiber bundle (A), the molded product of the present invention is that in the fiber-reinforced composite material included in the molded product, from 20 vol% to 99 vol% of the reinforcing fibers is the reinforcing fiber bundle (A) of the critical single fiber number or more defined by the formula (1), and the reinforcing fibers of the remaining 1 vol% to 80 vol% form a fiber bundle including less than the critical single fiber number, and are dispersed in the thermoplastic resin.

In the fiber-reinforced composite material included in the molded product of the present invention, when an average number of fibers in the reinforcing fiber bundle (A) of the critical single fiber number or more satisfies the following formula (2), a molded product particularly having smooth surface and uniform thickness is obtained, which is preferred.

$$0.7 \times 10^4 / D^2 < N < 1 \times 10^5 / D^2 \qquad (2)$$

wherein D is an average fiber diameter ($\mu$m) of single reinforcing fibers.

Specifically, in the case where the reinforcing fibers are carbon fibers and the average fiber diameter of the carbon fibers is from 5 to 7 $\mu$m, the critical single fiber number is from 86 to 120. In the case where the average fiber diameter of the carbon fibers is 5 $\mu$m, the average number of fibers in the fiber bundle is a range exceeding 280 and less than 4,000. The average number of fibers is preferably from 600 to 2,500, and more preferably from 600 to 1,600. In the case that the average fiber diameter of the carbon fibers is 7 $\mu$m, the average number of fibers in the fiber bundle is a range exceeding 142 and less than 2,040. The average number of fibers is preferably from 300 to 1,600, and more preferably from 300 to 800.

In the case that the average number (N) of fibers in the reinforcing fiber bundle (A) is less than $0.7 \times 10^4 / D^2$, it may be difficult to obtain high reinforcing fiber volume fraction (Vf). In the case that the average number (N) of fibers in the reinforcing fiber bundle (A) is $1 \times 10^5 / D^2$ or more, there is a possibility that thick portion is locally generated, leading to voids. It is more preferred that the average number (N) of fibers in the reinforcing fiber bundle (A) satisfies the following formula (2').

$$0.7 \times 10^4 / D^2 < N < 6 \times 10^4 / D^2 \qquad (2')$$

wherein D is an average fiber diameter ($\mu$m) of single reinforcing fibers.

The molded product of the present invention has the characteristic to show substantial isotropy. The term "substantial isotropy" used herein means that after molding a composite material, a tensile test on the basis of an arbitrary direction of a molded plate and a direction perpendicular to the arbitrary direction is conducted, tensile modulus is measured, and a ratio (E$\delta$) obtained by dividing larger value by smaller value, of values of tensile modulus measured, is 1.3 or less. That is, the molded product of the present invention is preferably that a ratio (E$\delta$) obtained by dividing larger value by smaller value, of values of tensile modulus in an arbitrary direction and a direction perpendicular to the arbitrary direction, is from 1.0 to 1.3. The molded product of the present invention is preferably that the minimum thickness portion and the maximum thickness portion substantially show isotropy.

The molded product of the present invention is preferably manufactured using a random mat including reinforcing fibers and a thermoplastic resin, preferably through a form of prepreg. Preferable manufacturing method is described hereinafter, but even in a molded product obtained by using a random mat, the fiber length of reinforcing fibers and the proportion between a bundle and a single fiber maintain the state in the random mat.

[Attachment part]

The molded product of the present invention may have an attachment shape such as boss or rib in conformity with various uses of a molded product. A portion of boss or rib may be freely arranged on one side and both sides. The thickness gradient in the molded product of the present invention means that thickness gradient is present other than attachment parts such as boss and rib, and the maximum thickness and minimum thickness of the molded product are defined on a bottom part excluding boss and rib parts. The attachment shape such as boss and rib may be present on only one side and may be present on both sides.

[Reinforcing fiber]

The reinforcing fiber in the molded product of the present invention is preferably at least one selected from the group consisting of a carbon fiber, an aramide fiber and a glass fiber. Those may be used alone or as mixtures of two kinds or more. Above all, the carbon fiber enables to provide a lightweight composite material having excellent strength, and is therefore particularly preferred. The carbon fiber may be any of PAN type and pitch type. The average fiber diameter is preferably from 3 $\mu$m to 12 $\mu$m, and more preferably from 5 $\mu$m to 7 $\mu$m. Those reinforcing fibers used in many cases have a sizing agent adhered thereto. The amount of the sizing agent adhered is preferably 0.01 to 10 parts by weight per 100 parts by weight of the reinforcing fibers.

[Thermoplastic resin]

Examples of the thermoplastic resin in the molded product of the present invention include a vinyl chloride resin, a vinylidene chloride resin, a vinyl acetate resin, a polyvinyl alcohol resin, a polystyrene resin, an acrylonitrile-styrene resin (AS resin), an acrylonitrile-butadiene-styrene resin (ABS resin), an acrylic resin, a methacrylic resin, a polyethylene resin, a polypropylene resin, a polyamide 6 resin, a polyamide 11 resin, a polyamide 12 resin, a polyamide 46 resin, a polyamide 66 resin, a polyamide 610 resin, a polyacetal resin, a polycarbonate resin, a polyethylene terephthalate resin, a polyethylene naphthalate resin, a polybutylene terephthalate resin, a polyacrylate resin, a polyphenylene ether resin, a polyphenylene sulfide resin, a polysulfone resin, a polyether sulfone resin, a polyether ether ketone resin, a polylactic acid resin, and resins comprising those copolymers. Those may be used alone or as mixtures of two kinds or more.

Of those thermoplastic resins, a resin having a melting point of from 180°C to 350°C is preferred. As necessary, those thermoplastic resins may contain additives such as a flame retardant, a stabilizer, a UV-resistant agent, an antistatic agent, a pigment, a release agent, a softener, a plasticizer and a surfactant.

[Unidirectional material layer]

The molded product of the present invention is preferably that an unidirectional material layer containing a unidirectional material in which reinforcing fibers are aligned in one direction and a thermoplastic resin is provided on a layer, the layer is comprised of the fiber-reinforced composite material containing reinforcing fibers having an average fiber length of from 5 mm to 100 mm and a thermoplastic resin and reinforcing fibers have a fiber areal weight of from 25 to 3,000 g/m$^2$ and are substantially two-dimensionally randomly oriented (the layer is hereafter referred to as a "random layer").

That is, the molded product of the present invention includes a layered body having the random layer and the unidirectional material layer containing the unidirectional material in which continuous long reinforcing fibers are aligned in one direction and the thermoplastic resin, and includes the layered body having thickness gradient. In the layered body, the unidirectional material layer may be provided on at least one surface layer, and may be provided on an inner layer.

In this case, the portion having larger thickness may be a portion of only the random layer, and may be a portion including the layered body of the random layer and the unidirectional material layer.

The unidirectional material layer may be one layer and may be a multilayer of two layers or more. In the case of multilayer, the direction of reinforcing fibers may be one direction and may be two directions or more. In light of isotropy of physical properties, the direction of reinforcing fibers in the case where the unidirectional material layer is a multilayer is more preferably pseudo isotropy.

The unidirectional material may be a multi-axial woven fabric in which a material (multi-axial woven fabric base material) obtained by forming a bundle of reinforcing fibers aligned in one direction into a sheet shape and stacking the sheets with changing an angle is stitched with a stitching yarn such as a nylon yarn, a polyester yarn or a glass fiber yarn by passing the stitching yarn through the stacked body in a thickness direction and reciprocating the yarn between a front surface and a rear surface of the stacked body along a surface direction.

Average fiber diameter of the reinforcing fibers contained in the unidirectional material layer is preferably from 3 $\mu$m to 12 $\mu$m, and more preferably from 5 $\mu$m to 7 $\mu$m.

The amount of the thermoplastic resin in the unidirectional material layer is preferably from 30 to 200 parts by weight per 100 parts by weight of the reinforcing fibers. The amount is more preferably from 40 to 100 parts by weight per 100 parts by weight of the reinforcing fibers.

The thermoplastic resin included in the unidirectional material layer may be the same as a matrix resin in the random layer and may differ from the matrix resin. Specific examples of the thermoplastic resin include the same resins as described in the item of the random layer. The unidirectional material layer preferably that the unidirectional material in which reinforcing fibers are aligned in one direction is impregnated or semi-impregnated with the thermoplastic resin. The degree of impregnation or semi-impregnation may be appropriately adjusted by a pressing step of a production method described hereinafter.

A method for producing the unidirectional material layer is not particularly limited, and the unidirectional material layer may be obtained by, for example, a pultrusion method. In the case of the pultrusion method, a unidirectional material layer in which reinforcing fibers have been impregnated with a thermoplastic resin is preferably obtained. In the case where the degree of impregnation with a thermoplastic resin is suppressed, that is, the semi-impregnated layer, the unidirectional material layer may be preferably obtained by, for example, a method of aligning reinforcing fibers on a sheet containing a thermoplastic resin in one direction and heating while pressing as necessary.

In the present invention, a method for providing the unidirectional material layer to the random layer is not particularly limited. A method of combining the random mat and the unidirectional material and pressing the same in a mold is preferably used. This method preferably includes a method of arranging the unidirectional material layer at a desired position in a mold, setting a random mat thereon so as to be along in a shape of the mold, and pressing. Although depending on a shape to be formed, in the case of a complicated shape, a semi-impregnated layer is preferably used in the unidirectional material layer.

[Method for manufacturing molded product]

The molded product of the present invention may be preferably obtained by using a random mat or a prepreg, including a fiber-reinforced composite material containing reinforcing fibers having an average fiber length of from 5 mm to 100 mm and a thermoplastic resin, and pressing the same in a mold.

That is, the present invention includes a method for manufacturing a molded product having thickness gradient, including performing impregnation to molding that include the following steps A-1) to A-3), or performing impregnation to molding that include the following steps B-1) to B-4), using a random mat including a fiber-reinforced composite material containing reinforcing fibers having an average fiber length of from 5 mm to 100 mm and a thermoplastic resin.

A-1) A step of obtaining a prepreg by heating the random mat to a melting point or high and lower than a decomposition temperature in the case where the thermoplastic resin is crystalline, or to a glass transition temperature or higher and lower than the decomposition temperature in the case that the thermoplastic resin is non-crystalline, and pressuring to impregnate the reinforcing fibers with the thermoplastic resin.

A-2) A step of arranging the prepreg obtained in A-1) in a mold having gradient in a space thickness of a cavity (hereinafter referred to as "cavity thickness") formed by an upper mold and a lower mold, the mold adjusted to a temperature lower than a melting point in the case where the thermoplastic resin is crystalline, or lower than a glass transition temperature in the case where the thermoplastic resin is non-crystalline.

A-3) A step of pressurizing the prepreg arranged in the mold in A-2) above to mold the same.

B-1) A step of arranging the random mat in a mold having gradient in cavity thickness.

B-2) A step of pressurizing the random mat while rising a temperature to a temperature of a melting point or higher and lower than a thermal decomposition temperature of the thermoplastic resin in the case that the thermoplastic resin is crystalline, or to a temperature of a glass transition temperature or higher and lower than a thermal decomposition temperature of the thermoplastic resin in the case that the thermoplastic resin is non-crystalline (first pressing step).

B-3) A step including at least one stage, of pressurizing such that a pressure in a final stage is from 1.2 to 100 times the pressure in the first pressing step, and thereby impregnating the reinforcing fiber bundle with the thermoplastic resin (second pressing step).

B-4) A step of completing the molding by adjusting a mold temperature to a temperature lower than a melting point in the case that the thermoplastic resin is crystalline, or to a temperature lower than a glass transition temperature in the case that the thermoplastic resin is non-crystalline.

[Mold shape]

The mold used for molding has gradient in cavity thickness. The thickness of a cavity is preferably that a ratio of maximum height to minimum height exceeds 1 and is 10 or less. The ratio of maximum height to minimum height is more preferably from 1.2 to 5, and still more preferably 1.2 to 3.

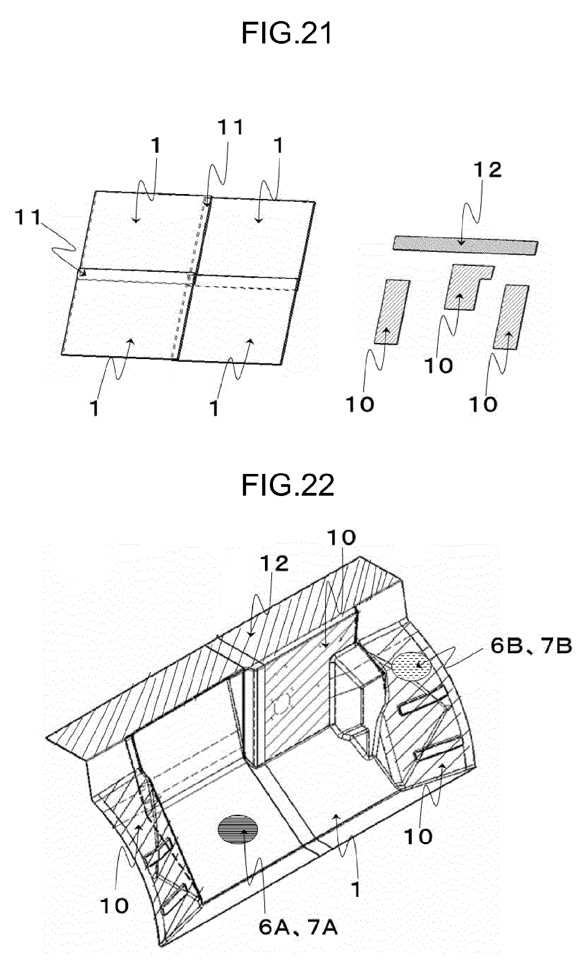

The shape of a mold is not particularly limited except that the cavity thickness has gradient. The mold is preferably includes a core side and a cavity side which have a share edge structure. An explanatory view of a share edge structure is shown in Fig. 22. Angle of the share is not particularly limited, and an angle of from 1 to 5° is preferred. Clearance of the share edge is not particularly limited, and a clearance of from 0.05 mm to 0.20 mm is preferred.

Surface of the mold may be polished according to design required in a molded product to be obtained. In order that the molded product has smooth surface, the surface is preferably polished with a polishing material of #400 or more.

[Method for obtaining molded product having thickness gradient]

It is preferred that the method for obtaining a molded product having thickness gradient in the present invention is specifically the following method a) or b), other than using a mold having gradient in cavity thickness.

a) A method of placing a partial material including the random mat and/or the prepreg and/or the unidirectional material layer on a part of a surface or an inner layer of a base material including the random mat and/or the prepreg, arranging the resulting stacked body, and pressing the stacked body, thereby integrally molding.

In the method a), a material to be stacked on a part of the base material is called a partial material. That is, the method a) is a method of placing the partial material on the base material at a portion that is desired to increase its thickness, arranging the resulting stacked body in a mold, and pressing the same, thereby integrally molding.

On the other hand, the method b) is a method of obtaining a molded product having thickness gradient by fluidizing the base material in the mold and molding even in the case that the thickness of the arranged in the mold is constant, or the thickness gradient of a molded product to be obtained is not consistent with the thickness gradient of the base material. In the method of the present invention, even though the base material is fluidized in the mold, fiber orientation of a molded product maintains the state of the base material, and isotropy is maintained.

Specific method of pressing common between the methods a) and b), and a method of fluidizing the base material in the mold and molding are described hereinafter.

In the method a), the partial material may be stacked on a plurality of portions of the base material, and in such a case, an appropriate partial material may be selected from the group consisting of the random mat, the prepreg and the unidirectional material layer in the respective partial materials. The base material and/or the partial material may be made to have a desired thickness by stacking a plurality of random mats, prepregs and unidirectional material layers. In the case of using a plurality of random mats, prepregs and unidirectional material layers in the partial material, same kind of material may be used, and different kinds of materials may be combined.

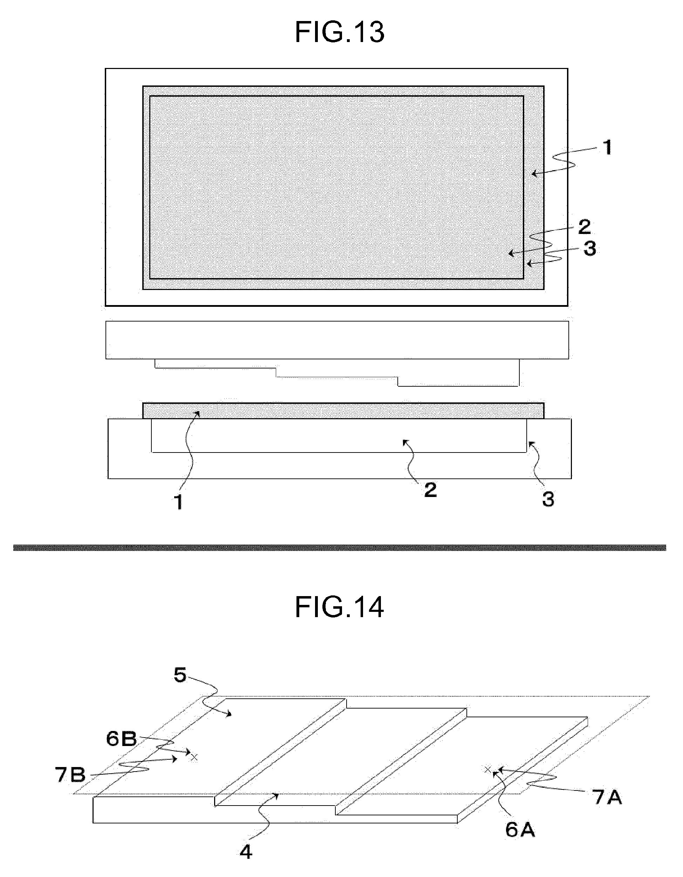

The random mat and prepreg used in the base material and the random mat and prepreg used in the partial material may independently select appropriate one. The same kind may be used, and different kinds may be combined. In the integrated molded product according to the present invention, the base material may be a base material obtained by stacking other random mat or prepreg on the edge of at least one of the random mat and the prepreg (Fig. 13). This enables to form an integrated molded product with large area, that may not be produced by one base material. Furthermore, even though a complicated shape that is difficult to follow up to a mold shape with one base material, an integrated molded product having thermally and mechanically substantial isotropy may be obtained.

In this case, the number of the random mat and/or prepreg used is not particularly limited. For example, three or more random mats and prepregs may be used as shown in Fig. 14.

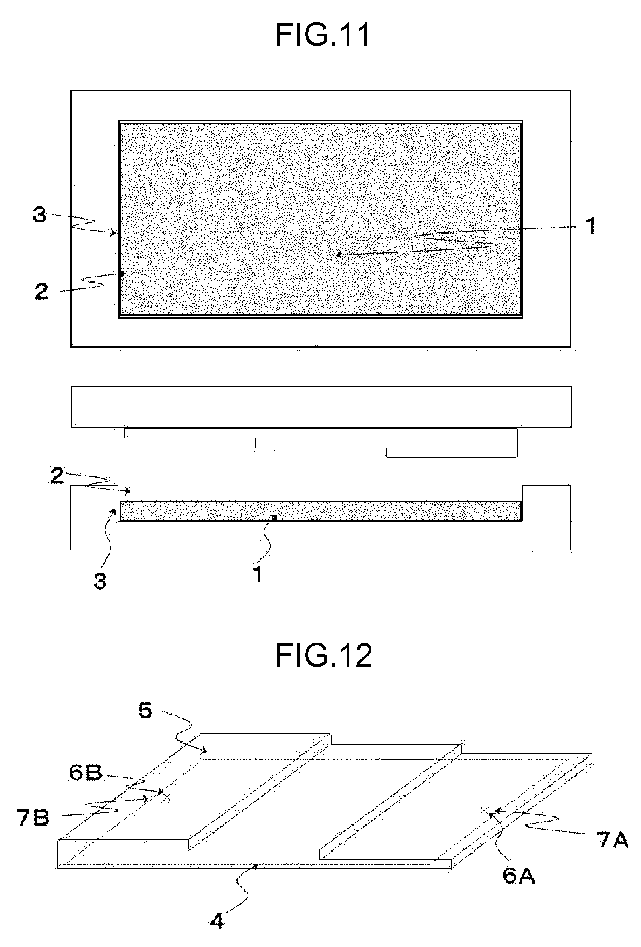

Lap margin 11 (Fig. 11) at which one random mat or prepreg and other random mat or prepreg are stacked is not particularly limited, but is preferably from 5 to 50 times the thickness of the random mat or the prepreg.

[Prepreg]

In the case of conducting impregnation to molding includes the steps A-1) to A-3) in the present invention, the random mat is heated to a temperature of a melting point or higher and lower than a thermal decomposition temperature in the case that the thermoplastic resin is crystalline, and to a temperature of a glass transition temperature or higher and lower than a thermal decomposition temperature in the case that the thermoplastic resin is non-crystalline, thereby impregnating reinforcing fibers with the thermoplastic resin and obtaining a prepreg, and the prepreg is used for molding. The form of the reinforcing fibers in the prepreg maintains the state in the random mat.

The prepreg may be directly subjected to the step A-2) without cooling, and may be subjected to the step A-2) through a step of once impregnating the prepreg with the thermoplastic resin and solidifying. The prepreg has the impregnated state that the thermoplastic resin penetrates in the reinforcing bundle and between single fibers of reinforcing fibers. As described above, the random mat is characterized in that reinforcing fibers and fibrous or particulate thermoplastic resin are mixed and are closely present, and therefore the reinforcing fibers may be easily impregnated with the thermoplastic resin. The thickness of the prepreg is from 1 to 10 times, and preferably from 1 to 5 times, the thickness of a molded product to be obtained. The thickness is not limited, but is preferably 0.1 mm or more. The upper limit is a thickness such that the prepreg is arranged in a mold and may be molded, and is substantially about 30 mm.

The prepreg has a void fraction of preferably from 0 to 30%, and more preferably from 0 to 10%. The void fraction is still more preferably from 0 to 5%, and the most preferred void fraction is from 0 to 3%. The void fraction of the prepreg is calculated by observing a cross-section of a prepreg with an optical microscope and dividing an area of voids by a cross-sectional area of an observation base material. The observation is n=5 per one prepreg, and its average value is defined as a void fraction.

[Cold press method]

Cold press method that conducts (impregnation to molding) by the steps A-1) to A-3) is specifically described below.

As described above, in the step A-1), the random mat is heated to a temperature of a melting point or higher and lower than a thermal decomposition temperature in the case that the thermoplastic resin contained is crystalline, and to a temperature of a glass transition temperature or higher and lower than a thermal decomposition temperature in the case that the thermoplastic resin contained is non-crystalline, and pressurized to impregnate the thermoplastic resin into the reinforcing fiber bundle and between single fibers of reinforcing fibers, thereby obtaining a prepreg. The prepreg obtained is reheated while maintaining the temperature during impregnation or once having been allowed to cool, and is used in the next step A-2). The temperature of the prepreg may be obtained by attaching a K-type thermocouple to the surface of the prepreg and measuring with a measuring instrument arranged outside a heating furnace.

In the next step A-2), the prepreg obtained in the step A-1) is preferably arranged in a mold adjusted to a temperature lower than a melting point in the case that the thermoplastic resin contained is crystalline, and to a temperature lower than a glass transition temperature in the case that the thermoplastic resin contained is non-crystalline, such that a charge rate represented by the following formula (3) is from 5 to 100%.

$$\text{Charge rate}=100\times \text{ base material area (mm}^2)/\text{mold cavity projected area (mm}^2) \qquad (3)$$

wherein the mold cavity projected area means a projected area in a draft direction of all of random mats or prepregs arranged.

Even in the case that the charge rate is 100%, that is, the base material area equals to the mold cavity projected are, and even in the case that the charge rate exceeds 100%, the base material may be fluidized in a mold in a thickness direction (draft direction of molded product), and a molded product having thickness gradient may be integrally molded. The upper limit of the charge rate is preferably 100% for the reason that trimming is not necessary. The upper limit is preferably 95%, and more preferably 90%.

The lower limit of the charge rate is 5%, preferably 10%, more preferably 20%, and still more preferably 30%. When the prepreg is arranged in a mold, in the case that the charge rate is less than 5%, heat is easily drawn from a mold when the prepreg pressurized during molding fluidizes in the mold, and the prepreg may be solidified before forming a desired shape.

One prepreg or a layered body of 2 to 100 prepregs may be arranged in a mold. In the case of stacking, a part or the whole of prepregs is layered depending on a molded product to be obtained. It is desired that a part or the whole of face of prepreg edge does not contact a mold cavity edge portion. Furthermore, in the case of stacking, the prepregs are not required to have the same shape, and it is sufficient to stack a part or the whole of the prepregs.

Thus, in arranging the prepreg in a mold in the step A-2), when the charge rate is preferably from 5 to 100%, a lightweight molded product may be manufactured in high productivity while securing a layer in which reinforcing fibers are substantially two-dimensionally oriented in a plane without occurrence of material loss and trouble of trimming.

In the step A-2), the arrangement location of the prepreg is preferably a horizontal part (0°) of a mold or a gradient part having an angle to a horizontal part thereof of 70° or less. Where the prepreg is arranged on the gradient part having an angle to a horizontal part exceeding 70°, a gradient part of a mold may contact the prepreg in mold damping when molding so as to deviate the location, or the prepreg is drawn in the gradient part, and normal molding may not be conducted.

Furthermore, in the step A-2), in arranging the prepreg as a base material in the mold, when the base material is arranged avoiding a portion such as a branching part of a molded product obtained, at which prepregs gather during molding to form a portion having large thickness or wrinkles are easily to be generated, a molded product having extremely uniform thickness may be obtained, which is preferred.

The thickness of the prepreg in the mold may be appropriately selected in conformity with a thickness of a shape to be obtained. However, when the charge rate of the base material to the mold is from 5 to 80%, the thickness of the prepreg or the total of thicknesses of prepregs stacked is preferably 1.0 mm or more in order to appropriately conduct fluidization.

The temperature of the mold is preferably from (melting point - 200°C) to (melting point - 10°C) in the case that the thermoplastic resin is crystalline, and from (glass transition temperature - 200°C) to (glass transition temperature - 10°C) in the case that the thermoplastic resin is non-crystalline. By this, the molded product obtained from the prepreg in the step A-3) is cooled to a temperature at which a shape becomes stable, and may be taken out of the mold.

In the step A-3), the prepreg arranged in the mold in the step A-2) is pressurized and molded. The pressure in this case is preferably from 0.1 MPa to 100 MPa, more preferably from 0.2 MPa to 40 MPa, and still more preferably from 0.5 MPa to 20 MPa. The time reaching the target pressure is desirably from 0.01 to 10 seconds.

After reaching the target pressure, the prepreg is pressurized for from 5 to 200 seconds and molded as described before. More preferred pressurizing time is from 10 to 60 seconds. During pressuring, the prepreg is fluidized and molded, and simultaneously cooled to a temperature at which the shape stabilizes by heat exchange with the mold. Thereafter, the mold is opened, and a molded product is obtained.

In the above steps of the cold press method, molding may be conducted by replacing a part of prepregs with the unidirectional material layer.

[Hot press method]

Hot press method that conducts (impregnation to molding) by the steps B-1) to B-4) is specifically described below.

In the step B-1), the random mat is preferably arranged in a mold such that the charge rate represented by the formula (3) is from 5 to 100%. One random mat or a stacked body of 2 to 100 random mats may be arranged in the mold. In this case, the random mat may be used by previously heating and/or pressuring the random mat to reduce its volume. In the case of stacking, a part or the whole of the random mats is stacked depending on a molded product to be obtained, and such a stacked body is used. A part or the whole of the face of the random mat edge desirably does not contact a mold cavity edge portion. Furthermore, in the case of stacking, all of the random mats are not required to have the same shape, and it is sufficient to stack a part or the whole of the respective random mats. The significance of the charge rate range and the problem when the charge rate falls outside the range are the same as described in the prepreg of the step A-2) in the cold press method.

In the step B-1), the arrangement location of the random mat is preferably a horizontal part (0°) of a mold, more precisely mold cavity, or a gradient part having an angle to the horizontal part of 70° or less. The problems in the case that the random mat is arranged on a gradient part having an angle to the horizontal part of a mold exceeding 70° are the same as described in the prepreg in the step A-2) of the cold press method.

In the step B-1), as described regarding the arrangement of the prepreg of the step A-2) of the cold press method, in arranging the random mat as a base material in the mold, when the base material is arranged avoiding a region such as a branching part of a molded product obtained, at which random mats gather during molding to form a part having a large thickness or wrinkles are easily to be generated, a molded product having extremely uniform thickness may be obtained, which is preferred.

The step B-2) is a step of rising a temperature to a temperature of a melting point or higher and less than a thermal decomposition temperature of the thermoplastic resin in the case that the thermoplastic resin contained in the random mat is crystalline, or to a temperature of a glass transition temperature or higher and lower than the thermal decomposition temperature of the thermoplastic resin in the case that the thermoplastic resin is non-crystalline and pressuring the random mat to perform impregnation of the thermoplastic resin (first pressing step).

The next step B-3) is a step including one stage or more, of pressurizing such that a pressure in a final stage is from 1.2 to 100 times the pressure in the first pressing step (second pressing step).

The first pressing step is that the random mat is pressurized to a predetermined target pressure, is preferably maintained for from 0.5 to 20 minutes, and is heated to a temperature of a melting point or higher of the thermoplastic resin and lower than the thermal decomposition temperature in the case that the thermoplastic resin contained in the random mat is crystalline, and to a temperature of a glass transition temperature or higher of the thermoplastic resin and lower than the thermal decomposition temperature, thereby impregnating the thermoplastic resin into a reinforcing fiber bundle and between single fibers of reinforcing fibers. The time required to transfer to the second pressing step may be appropriately selected by performance of a molding machine. The time is desirably from 0.01 to 200 seconds in order to shorten the time for molding.

The second pressing step is a step of conducting one stage or multistage pressurization. For the purpose of simplification of molding, one stage is preferred. Mold temperature in the second pressing step may be the same as the mold temperature in the first pressing step, and may be increased to 1°C or higher and lower than a thermal decomposition temperature. In the case that the second pressing step is multistage, the temperature may be increased or cooled, with subsequent stage, or temperature increase and cooling may be conducted alternately.

The total pressing time of the second pressing step is not particularly limited, but is preferably from 0.5 to 10 minutes from the standpoint of shorting of a molding time.

The target pressure of the first pressing step is from 0.1 MPa to 10 MPa, and preferably from 0.2 MPa to 8 MPa. The final target pressure of the second pressing step may be appropriately selected depending on the performance of a molding machine. The final target pressure is preferably from 0.2 MPa to 100 MPa, more preferably from 0.3 MPa to 50 MPa, and still more preferably from 0.5 MPa to 20 MPa. The final target pressure of the second pressing step is a pressure of from 1.2 to 100 times the pressure of the first pressing step. That is, the molding pressure in B-2 to B-3 is preferably from 0.1 MPa to 100 MPa.

In the step B-4), the molding is conducted by adjusting the mold temperature to a temperature lower than a melting point in the case that the thermoplastic resin contained in the random mat is crystalline, and to a temperature lower than a glass transition temperature in the case that the thermoplastic resin is non-crystalline. The mold temperature after adjustment is preferably from (melting point - 200°C) to (melting point - 10°C) in the case that the thermoplastic resin is crystalline, and from (glass transition temperature - 200°C) to (glass transition temperature - 10°C) in the case that the thermoplastic resin is non-crystalline. The time required in this step may be appropriately controlled by cooling conditions and the like. The time is preferably from 0.5 to 20 minutes from the standpoint of shorting of a molding time. Adjustment method of mold temperature is not particularly limited. The mold is appropriately cooled by a method of, for example, flowing a cooling medium in a temperature control circuit in the mold.

In the above steps of the hot press method, molding may be conducted by replacing a part of the random mat with the unidirectional material layer.

[Random mat]

The molded product including a fiber-reinforced composite material may be preferably manufactured using a random mat containing reinforcing fibers and a thermoplastic resin as a starting material. A random mat that is a starting material of the molded product of the present invention is described below.

The random mat contains reinforcing fibers having an average fiber length of from 5 mm to 100 mm and a thermoplastic resin, wherein the reinforcing fibers have a fiber areal weight of from 25 to 3,000 g/m$^2$ and are substantially two-dimensionally randomly oriented.

The random mat contains a reinforcing fiber bundle (A) of the critical single fiber number or more defined by the following formula (1) in a proportion of from 20 vol% to 99 vol% to the total amount of fibers in the mat.

$$\text{Critical single fiber number}=600/D \quad\quad\quad (1)$$

wherein D is an average fiber diameter (μm) of single reinforcing fibers.

Where the proportion of the reinforcing fiber bundle (A) to the total amount of fibers in the random mat is less than 20 vol%, there is an advantage that a molded product having excellent surface grade is obtained, but a fiber-reinforced composite material having excellent mechanical properties is difficult to obtain. Where the proportion of the reinforcing fiber bundle (A) exceeds 99 vol%, a thickness of crossing parts of fibers is locally increased, and a molded product having small thickness is difficult to obtain. The proportion of the reinforcing fiber bundle (A) is more preferably from 30 vol% to 90 vol%, and particularly preferably from 30 vol% to 80 vol%. Specifically, when the average fiber diameter of the carbon fibers contained in the random mat is from 5 μm to 7 μm, the critical single fiber number is from 86 to 120, and a carbon fiber strand piece in which the fibers are integrally bundled in the number larger than the critical single fiber number corresponds to the reinforcing fiber bundle (A). Therefore, in the preferred random mat, from 20 vol% to 99 vol% of the reinforcing fibers included in the random mat is the reinforcing fiber bundle (A) in which the critical single fiber number or more are bundled, and the remainder is separated into a reinforcing fiber bundle (B1) and/or a single fiber (B2), of less than the critical single fiber number.

Furthermore, the average number (N) of fibers in the reinforcing fiber bundle (A) preferably satisfies the following formula (2).

$$0.7\times10^4/D^2<N<1\times10^5/D^2 \quad\quad\quad (2)$$

wherein D is an average fiber diameter (μm) of single reinforcing fibers.

Furthermore, the average number (N) of fibers in the reinforcing fiber bundle (A) of the critical single fiber number or more preferably satisfies the following formula (2').

$$0.7 \times 10^4/D^2 < N < 6 \times 10^4/D^2 \qquad (2')$$

wherein D is an average fiber diameter ($\mu$m) of single reinforcing fibers.

For example, in the case that the average fiber diameter of carbon fibers is 5 $\mu$m, the average number (N) of fibers in the fiber bundle is a range of from 280 to 2,000. Above all, the average number (N) is preferably from 600 to 1,600. In the case that the average fiber diameter of carbon fibers is 7 $\mu$m, the average number (N) of fibers in the fiber bundle is a range of from 142 to 1,020. Above all, the average number (N) is preferably from 300 to 800. The average fiber length of the reinforcing fibers in the random mat is from 5 mm to 100 mm, preferably from 10 mm to 100 mm, more preferably 15 mm to 80 mm, and still more preferably from 20 mm to 60 mm. In the case that the reinforcing fibers are cut into a fixed length in the cutting step of the reinforcing fibers as described above, the average fiber length in the random mat nearly equals to a fiber length cut.

In the case that the average number (N) of fibers in the reinforcing fiber bundle (A) is $0.7 \times 10^4/D^2$ or less, it becomes difficult to obtain high reinforcing fiber volume fraction (Vf). In the case that the average number (N) of fibers in the reinforcing fiber bundle (A) is $1 \times 10^5/D^2$ or more, a portion having large thickness is locally formed, leading to occurrence of voids. In the case that it is attempted to obtain a thin composite material having a thickness of 1 mm or less, if fibers simply separated are used, unevenness in fiber density is large and good physical properties are not obtained. In the case that all of fibers is opened to a single fiber level, a mat having smaller thickness is easily obtained, but crossings of fibers in the mat are increased, and a mat having high reinforcing fiber volume fraction is not obtained. A random mat having small thickness and imparting a composite material having high physical properties may be obtained by forming a random mat in which reinforcing fibers including the reinforcing fiber bundle (A) of the critical single fiber number or more defined by the formula (1), and the reinforcing fiber bundle (B1) of less than the critical single fiber number and/or a bundle (B2) completely separated into single fibers are simultaneously present in the above proportion. The random mat may have various thicknesses. A thin molded product having a thickness of from about 0.2 mm to 1 mm may be preferably obtained by using the random mat as a preform. The average number of fibers in the reinforcing fiber bundle (A) and the proportion thereof may be controlled by selecting conditions of the slitting step, the cutting step and the opening step.

Thus, by forming the random mat in which reinforcing fibers having different bundling state are present in a specific proportion, surface nature, physical properties, moldability and the like of a composite material are greatly improved.

The thickness of the random mat is not particularly limited, and a random mat having a thickness of from 1 mm to 100 mm may be obtained at the request. To develop the effect that a composite material molded product having small thickness is obtained, the random mat preferably has a thickness of from 2 mm to 50 mm.

The amount of from 20 vol% to 99 vol% of the reinforcing fiber bundle (A) in the random mat may be achieved by controlling, for example, a pressure of air blown in the opening step. The amount may be further achieved by adjusting a size of a fiber bundle subjected to the cutting step, for example, a width of a bundle or the number of fibers per width. Specific methods include a method of subjecting a strand to the cutting step in a state so as to obtain thin and wide strand by, for example, widening the strand, and a method of peforming the slitting step before the cutting step. The specific methods further include a method of cutting a fiber bundle using a fiber separating knife having many short blades arranged, and a method of slitting simultaneously with cutting.

The average number (N) of fibers in the reinforcing fiber bundle (A) of the critical single fiber number or more is preferably less than $1 \times 10^5/D^2$. The above-described range of the average number (N) of fibers in the reinforcing fiber bundle (A) may be achieved by controlling a size of a fiber bundle subjected to the cutting step, for example, a width of a bundle or the number of fibers per width. Specific methods include a method of widening a fiber bundle by extending or the like and subjecting the fiber bundle to the cutting step, and a method of providing the slitting step before the cutting step. The fiber bundle may be slit simultaneously with cutting. The average number (N) of fibers in the reinforcing fiber bundle (A) may fall within a desired range by controlling, for example, a pressure of a gas blown to a fiber bundle piece in the extending step to adjust the degree of extending of the fiber bundle cut.

A random mat in conformity with a thickness of a composite material molded product for various purposes may be prepared. A random mat having small thickness is particularly useful as a preform of a thin molded product such as a surface skin of a sandwich material.

[Manufacturing method of random mat]

Preferred manufacturing method of a random mat is described below. The manufacturing method of the random mat preferably includes the following (I), (III), (IV) and (V), and more preferably further include the following (II) between (I) and (III). A random mat and a composite material, having particularly good isotropy are manufactured by sequentially carrying out those steps.

The random mat obtained is that the reinforcing fibers are not oriented in a specific direction in a plane, and are dispersed in arbitrary direction and arranged.

(I) Supply step of reinforcing fiber strand

The reinforcing fibers are used as a strand including a single yarn or a plurality of yarns aligned, the yarn being obtained by drawing the respective yarns from a plurality of reinforcing fiber wound yarns arranged in a creel part. The width of the strand is preferably from 10 mm to 50 mm (particularly from 20 mm to 30 mm). For this reason, in the case that the strand width of reinforcing fibers supplied is small, the strand may be widened to a given width in a strand supply step as necessary to form a thin and wide strand. The widening operation may be conducted by contacting the strand with a widening roller or bar.

(II) Step for slitting strand

The reinforcing fiber strand is then preferably formed into a plurality of narrow strands having a strand width of from 0.05 mm to 5 mm, and preferably from 0.1 mm to 1.0 mm, by continuously separating the strand in parallel to a longitudinal direction of the strand (that is, along a fiber length direction). Specifically, the step may be carried out by continuously cut the wide strand continuously transferred from the previous step in a longitudinal direction by a longitudinal slit apparatus (slitter) having a blade parallel to a fiber length direction, or separating the strand into a plurality of strands by a plurality of separating guides provided on a running path of a wide strand.

(III) Step for cutting reinforcing fiber

The strand that is not subjected to the slitting treatment or the narrow reinforcing fiber strand slit as above is cut into an average fiber length of from 5 mm to 100 mm.

The "average fiber length" used herein is obtained by measuring a fiber length of 100 fibers arbitrarily extracted by 1 mm unit using a caliper, and calculating its average. In normal case, the average fiber length consists with a cut interval of the strand by a cutter.

An apparatus used in cutting the reinforcing fibers in an average fiber length of from 5 mm to 100 mm is preferably a rotary cutter.

The rotary cutter preferably has a spiral knife having a specific angle. A knife angle for continuously cutting the reinforcing fibers is geometrically calculated by a width of the reinforcing fibers used and a fiber length after cutting, and the relationship of those preferably satisfies the requirement that fiber length (pitch of blades) of reinforcing fibers = strand width of reinforcing fibers x tan $(90-\theta)$, wherein $\theta$ is an angle between a circumferential direction and an arrangement direction of a knife.

In this case, when a cutter having a knife perpendicularly intersecting a fiber direction and a knife parallel to a fiber length direction is used, the fiber bundle may be slit in a longitudinal direction, and simultaneously cut into a specific fiber length. Thus, use of the cutter enables to simultaneously carry out the slitting step (II) and the cutting step (III).

(IV) Step for opening reinforcing fibers cut

In the next step, a gas is blown to the strand of the reinforcing fibers cut into a given fiber length (hereinafter referred to as "strand piece"), and the strand piece is opened so as to divide into fiber bundles of a desired size (the number of bundles).

The opening step (IV) is a step of introducing the strand piece in a pathway, and blowing a gas such as air to a reinforcing fiber bundle piece passing through the pathway, thereby separating the strand piece to a desired bundle size and dispersing in the gas. The degree of those may be appropriately controlled by, for example, a pressure of air blown. In the preferred embodiment, an air blowing nozzle is provided in the course of or at the tip of the pathway, and the air is directly blown to the strand piece in a wind velocity of from 5 to 500 m/sec from a compressed air blowing port, thereby the reinforcing fibers may be appropriately opened. Specifically, the reinforcing fibers may be opened in a desired degree by using a gas blowing nozzle in which a plurality of holes having a diameter of about 1 mm is formed in the pathway through which reinforcing fiber pieces pass, a pressure of from about 0.2 MPa to 0.8 MPa is applied from the outside, and compressed air is directly blown to the strand pieces from the holes.

The opening step is not that the whole fibers included in the strand piece are separated discretely and opened so as to separate until completely forming a single fiber state. The opening step is that a part of the strand piece is opened in a single fiber state or a near state thereof, and is a step adjusting that the major part of the fibers included in the fiber bundles in which single yarn are bundles in the constant number or more. That is, it is preferred that the degree of opening by a gas satisfies the proportion of the reinforcing fiber bundle (A) including the critical single fiber number or more defined by the formula (1), and additionally the average number (N) of fibers in the reinforcing fiber bundle (A) of the critical single fiber number or more.

(V) Step for forming random mat from reinforcing fibers and thermoplastic resin

This step is a step of diffusing the reinforcing fibers cut and opened in air, simultaneously supplying particulate-shaped or short fiber-shaped thermoplastic resins (those are hereinafter referred to as "thermoplastic resin particles and the like"), spraying the reinforcing fibers together with the thermoplastic resin particles and the like on a breathable support provided at a lower part of an opening apparatus, and depositing and fixing on the base material in a given thickness in the state that the reinforcing fibers and the thermoplastic resin particles and the like are mixed.

In this step, preferably the reinforcing fibers opened by a gas and the thermoplastic resin particles and the like supplied from a separate pathway are simultaneously sprayed toward the breathable support, deposited in a mat shape on the breathable support in the state that both are nearly uniformly mixed, and fixed in its state. In this case, the random mat may be continuously formed by that the breathable support is constituted of a conveyer having a net and the mixture is deposited on the breathable support while continuously moving the breathable support in one direction. Alternatively, uniform deposition may be achieved by moving the support in all directions.

The reinforcing fibers and the thermoplastic resin particles and the like are preferably sprayed so as to be two-dimensionally oriented. To apply while two-dimensionally orienting the opened reinforcing fibers, it is preferred to use a taper tube having a conical shape expanding toward a downstream side. In the taper tube, a gas blown to the reinforcing fibers diffuses, and a flow rate in the tube is reduced. At this time, turning force is given to the reinforcing fibers. By utilizing the Venturi effect, the reinforcing fibers opened may be uniformly sprayed together with the thermoplastic resin particles and the like without unevenness. For the fixing step described hereinafter, it is preferred to spray on a movable breathable support (net conveyer or the like) having a suction mechanism at a lower part thereof and deposit in a random mat shape.

In this step, the amount of the thermoplastic rein particles and the like supplied is preferably from 10 to 1,000 parts by weight per 100 parts by weight of the reinforcing fibers. The amount of the thermoplastic resin particles and the like is more preferably from 50 to 500 parts by weight, and still more preferably from 60 to 300 parts by weight, per 100 parts by weight of the reinforcing fibers.

The random mat formation step includes a step for fixing the reinforcing fibers and the thermoplastic resin particles and the like. That is, the fixing step is a step for fixing the deposited reinforcing fiber and thermoplastic resin particles and the like. Preferably the reinforcing fibers are fixed by sucking air from a lower part of the breathable support. The thermoplastic resin sprayed simultaneously with the reinforcing fibers is fixed by air suction when the thermoplastic resin has a fiber shape, and fixed in association with the reinforcing fibers even when the thermoplastic resin has a particle shape, while being mixed.

Thus, a mat having high two-dimensional orientation may be obtained by sucking from a lower part of the deposited face. The random mat thus obtained is that the thermoplastic resin particles and the like are uniformly present in spaces of the reinforcing fibers included in the random mat and near the reinforcing fibers. As a result, the random mat may be impregnated with the resin with a short movement distance of the resin in a relatively short period of time in a heat impregnation pressurization step described hereinafter.

In the case that a sheet, a net or the like constituting the breathable support has large opening and a part of the thermoplastic resin particles and the like passes through the support and does not remain in the mat, it is possible to prevent this by setting a non-woven fabric or the like on the surface of the support, and spraying the reinforcing fibers and the thermoplastic resin particles and the like on the non-woven fabric to fix them on the non-woven fabric.

After cutting the reinforcing fiber strand in a constant length, the strand pieces and the reinforcing fibers separated in a single fiber state when cutting are supplied to a transportation pathway for suction conveying, a gas is sprayed to the reinforcing fibers from gas spray nozzles arranged in the course of the transportation pathway or at the end thereof to separate and open the cut strand pieces to a reinforcing fiber bundle having a desired size (diameter), and at the same time, the reinforcing fibers are sprayed together with the thermoplastic resin particles and the like toward the surface of the breathable support (hereinafter referred to as a "fixing net") continuously or intermittently moving in a constant direction, deposited and fixed thereon, thereby a random mat may be formed.

As described above, the reinforcing fibers, and particulate-shaped and/or fiber-shaped thermoplastic resin are mixed without unevenness and are present in the random mat. Therefore, there is an advantage that it is not necessary to fluidize the fibers and the resin in a mold, and impregnation with the resin may be easily performed. Therefore, the reinforcing fibers may maintain isotropy in the random mat even in a molded product obtained.

Example

The present invention is described below by examples, but the scope of the present invention is not limited by those. Each measurement value in examples is measured by the following method.

1) Analysis of reinforcing fiber bundle in random mat

A random mat is cut into a size of about 100 mm $\times$ 100 mm. All fiber bundles are extracted from the mat cut with tweezers, and the number (N) of bundles in a reinforcing fiber bundle (A), and length (Li) and weight (Wi) of the fiber bundle are measured and recorded. Fiber bundles that are small to such an extent that the bundles may not be extracted by tweezers are gathered, and its weight (Wk) is measured later. For the measurement of weight, a balance measurable to 1/100 mg is used. The critical single fiber number is calculated from a fiber diameter (D) of the reinforcing fibers used in the random mat, and the reinforcing fiber bundles are classified into a reinforcing fiber bundles (A) of the critical single fiber number or more, and reinforcing fiber bundles other than the reinforcing fiber bundles (A). In the case where two kinds or more of the reinforcing fibers are used, the reinforcing fibers are separated every kind of fiber, and measurement and evaluation are conducted in each kind.

The average number (N) of fibers in the reinforcing fiber bundle (A) is obtained as follows.

The number (Ni) of fibers in each reinforcing fiber bundle is obtained from a fineness (F) of reinforcing fibers used by the following formula.

$$Ni=Wi/(Li \times F)$$

The average number (N) of fibers in the reinforcing fiber bundle (A) is obtained from the number (I) of bundles of the reinforcing fiber bundle (A) by the following formula.

$$N=\Sigma Ni/I$$

The proportion (VR) of the reinforcing fiber bundle (A) to the total amount of fibers of the mat is obtained by the following formula using a density (ρ) of the reinforcing fibers.

$$VR=\Sigma(Wi/\rho) \times 100/((Wk+\Sigma Wi)/\rho)$$

2) Analysis of average fiber length of reinforcing fibers contained in random mat or composite material

Lengths of 100 reinforcing fibers arbitrarily extracted from a random mat or a composite material are measured by 1 mm unit with tweezers and a loupe, and recorded. An average fiber length (La) is obtained from lengths (Li) of all of reinforcing fibers measured, by the following formula. In the case of a composite material, after treating the composite material in a furnace at about 500°C for about 1 hour to remove a resin, the reinforcing fibers are extracted.

$$La=\Sigma Li/100$$

3) Analysis of carbon fiber bundle in molded product

Regarding a molded product, after treating the molded product in a furnace at about 500°C for about 1 hour to remove a resin, the carbon fiber bundle was measured in the same manner as in the random mat above.

4) Analysis of amounts of fiber and resin in molded product

After treating the molded product in a furnace at 500°C for 1 hour to burn and remove a resin, masses of carbon fiber content and resin content were calculated by weighing mass of a sample before and after the treatment.

5) Tensile test

A test piece is cut from a horizontal part of a molded product using water jet, and tensile modulus was measured using Tensilon universal tester manufactured by A & D. A ratio obtained by dividing large value by small value was calculated.

6) Appearance evaluation

Appearance of a molded product was visually observed for the purpose of evaluation of moldability. The case that a fiber-reinforced composite material sufficiently fills up to the edge of a molded product and surface appearance is good was defined as "Good", the case that defect is slightly observed was defined as "Fair", and the case that defect is observed was defined as "Poor".

Reference Example 1

Carbon fiber TENAX (registered trademark) STS40-24KS (average fiber diameter: 7 $\mu$m, fiber width: 10 mm), manufactured by Toho Tenax Co., Ltd. was used as a reinforcing fiber. The carbon fibers were cut into a length of 20 mm while extending, and were introduced in a taper tube in a feed rate of 1,232 g/min. Air was blown to the carbon fibers in the taper tube in a wind velocity of 450 m/sec to partially open the fiber bundle, and at the same time the carbon fibers were sprayed on a table movable in XY direction provided at a lower part of a taper tube outlet while conducting suction from a lower part of the table by a blower. Polyamide 6 resin (A1030, melting point: 215 to 220°C, thermal decomposition temperature: 300°C, manufactured by Unitika Ltd.) was supplied as a matrix resin to the taper tube in a rate of 1,482 g/min, and sprayed simultaneously with the carbon fibers. Thus, a random mat in which the carbon fibers having an average fiber length of 20 mm and the polyamide 6 were mixed was obtained. The form of the reinforcing fibers in the random mat was observed. As a result, a fiber axis of the reinforcing fibers is nearly parallel to a plane, and the reinforcing fibers were arbitrarily dispersed in a plane. The reinforcing fiber (carbon fiber) volume fraction (Vf, hereinafter referred to as Vf (volume fraction)) of the random mat was 35%, and the fiber areal weight of the reinforcing fibers was 1,232 g/m$^2$.

The average fiber length (La) and the proportion of the reinforcing fiber bundle (A), of the random mat obtained, and the average number (N) of fibers were examined. As a result, the average fiber length (La) was 20 mm, the critical single fiber number defined by the formula (1) was 86, the proportion of the reinforcing fiber bundle (A) to the total amount of fibers of the mat was 35%, and the average number (N) of fibers in the reinforcing fiber bundle (A) was 240.

The random mat obtained was heated to 250°C using a press machine in which a flat plate mold for impregnation was set, pressurized under a pressure of 3 MPa for 7 minutes and then cooled to 80°C. Thus, a plate-shaped prepreg having a thickness of 2.0 mm was obtained. The void fraction of the prepreg was 0.03%.

Reference Example 2

Carbon fiber TENAX (registered trademark) STS40-24KS (average fiber diameter: 7 $\mu$m, fiber width: 10 mm), manufactured by Toho Tenax Co., Ltd. was used as a reinforcing fiber. The carbon fibers were cut into a length of 10 mm while extending, and were introduced in a taper tube in a feed rate of 528 g/min. Air was blown to the carbon fibers in the taper tube in a wind velocity of 450 m/sec to partially open the fiber bundle, and at the same time the carbon fibers were sprayed on a table movable in XY direction provided at a lower part of a taper tube outlet while conducting suction from a lower part of the table by a blower. Polycarbonate resin (PANLITE (registered trademark) L-1225L, glass transition temperature: 145 to 150°C, thermal decomposition temperature: 350°C, manufactured by Teijinkasei Co., Ltd.) was supplied as a matrix resin to the taper tube in a rate of 1,440 g/min, and sprayed simultaneously with the carbon fibers. Thus, a random mat in which the carbon fibers having an average fiber length of 10 mm and the polycarbonate resin were mixed was obtained. The form of the reinforcing fibers in the random mat was observed. As a result, a fiber axis of the reinforcing fibers is nearly parallel to a plane, and the reinforcing fibers were arbitrarily dispersed in a plane. The Vf (volume fraction) of the random mat was 20%, and the fiber areal weight of the reinforcing fibers was 528 g/m$^2$.

The average fiber length (La) and the proportion of the reinforcing fiber bundle (A), of the random mat obtained, and the average number (N) of fibers were examined. As a result, the average fiber length (La) was 20 mm, the critical single fiber number defined by the formula (1) was 86, the proportion of the reinforcing fiber bundle (A) to the total amount of fibers of the mat was 35%, and the average number (N) of fibers in the reinforcing fiber bundle (A) was 240.

The random mat obtained was heated to 230°C using a press machine in which a flat plate mold for impregnation was set, pressurized under a pressure of 3 MPa for 7 minutes and then cooled to 50°C. Thus, a plate-shaped prepreg having a thickness of 1.5 mm was obtained. The void fraction of the prepreg was 0.2%.

Reference Example 3

Carbon fiber TENAX (registered trademark) STS40-24KS (average fiber diameter: 7 $\mu$m, fiber width: 10 mm), manufactured by Toho Tenax Co., Ltd. was used as a reinforcing fiber. The carbon fibers were cut into a length of 20 mm while extending, and were introduced in a taper tube in a feed rate of 1,232 g/min. Air was blown to the carbon fibers in the taper tube in a wind velocity of 450 m/sec to partially open the fiber bundle, and at the same time the carbon fibers were sprayed on a table movable in XY direction provided at a lower part of a taper tube outlet while conducting suction from a lower part of the table by a blower. PA66 fibers (T5 Nylon, tex: 1400 dex, manufactured by Asahi Kasei Fibers Corporation) dry cut into 2 mm were supplied as a matrix resin to the taper tube in a rate of 1,391 g/min, and sprayed simultaneously with the carbon fibers. Thus, a random mat in which the carbon fibers having an average fiber length of 20 mm and the PA66 were mixed was obtained. The form of the reinforcing fibers in the random mat was observed. As a result, a fiber axis of the reinforcing fibers is nearly parallel to a plane, and the reinforcing fibers were arbitrarily dispersed in a plane. The Vf (volume fraction) of the random mat was 35%, and the fiber areal weight of the reinforcing fibers was 1,232 g/m$^2$.

The average fiber length (La) and the proportion of the reinforcing fiber bundle (A), of the random mat obtained, and the average number (N) of fibers were examined. As a result, the average fiber length (La) was 20 mm, the critical single fiber number defined by the formula (1) was 86, the proportion of the reinforcing fiber bundle (A) to the total amount of fibers of the mat was 35%, and the average number (N) of fibers in the reinforcing fiber bundle (A) was 240.

The random mat obtained was heated to 300°C using a press machine in which a flat plate mold for impregnation was set, pressurized under a pressure of 4 MPa for 5 minutes and then cooled to 50°C. Thus, a plate-shaped prepreg having a thickness of 2.0 mm was obtained. The void fraction of the prepreg was 0.10%.

Reference Example 4

Carbon fiber TENAX (registered trademark) STS40-24KS (average fiber diameter: 7 $\mu$m, fiber width: 10 mm), manufactured by Toho Tenax Co., Ltd. was used as a reinforcing fiber. The carbon fibers were cut into a length of 20 mm while extending, and were introduced in a taper tube in a feed rate of 1,408 g/min. Air was blown to the carbon fibers in the taper tube in a wind velocity of 450 m/sec to partially open the fiber bundle, and at the same time the carbon fibers were sprayed on a table movable in XY direction provided at a lower part of a taper tube outlet while conducting suction from a lower part of the table by a blower. PP resin (PRIME POLYPRO J108M, manufactured by Prime Polymer Co., Ltd.) obtained by freeze-pulverizing into a size of about 1mm in the average diameter was supplied as a matrix resin to the taper tube in a rate of 1,092 g/min, and sprayed simultaneously with the carbon fibers. Thus, a random mat in which the carbon fibers having an average fiber length of 20 mm and the PP were mixed was obtained. The form of the reinforcing fibers in the random mat was observed. As a result, a fiber axis of the reinforcing fibers is nearly parallel to a plane, and the reinforcing fibers were arbitrarily dispersed in a plane. The Vf (volume fraction) of the random mat was 40%, and the fiber areal weight of the reinforcing fibers was 1,408 g/m$^2$.

The average fiber length (La) and the proportion of the reinforcing fiber bundle (A), of the random mat obtained, and the average number (N) of fibers were examined. As a result, the average fiber length (La) was 20 mm, the critical single fiber number defined by the formula (1) was 86, the proportion of the reinforcing fiber bundle (A) to the total amount of fibers of the mat was 35%, and the average number (N) of fibers in the reinforcing fiber bundle (A) was 240.

The random mat obtained was heated to 200°C using a press machine in which a flat plate mold for impregnation was set, pressurized under a pressure of 4 MPa for 5 minutes and then cooled to 50°C. Thus, a plate-shaped prepreg having a thickness of 2.0 mm was obtained. The void fraction of the prepreg was 0.07%.

Reference Example 5

Carbon fiber TENAX (registered trademark) STS40-24KS (average fiber diameter: 7 $\mu$m, fiber width: 10 mm), manufactured by Toho Tenax Co., Ltd. was used as a reinforcing fiber. The carbon fibers were cut into a length of 20 mm while extending, and were introduced in a taper tube in a feed rate of 1,220 g/min. Air was blown to the carbon fibers in the taper tube in a wind velocity of 450 m/sec to partially open the fiber bundle, and at the same time the carbon fibers were sprayed on a table movable in XY direction provided at a lower part of a taper tube outlet while conducting suction from a lower part of the table by a blower. PBT resin (DURANEX 2002, manufactured by Polyplastics Co., Ltd.) was supplied as a matrix resin to the taper tube in a rate of 1,700 g/min, and sprayed simultaneously with the carbon fibers. Thus, a random mat in which the carbon fibers having an average fiber length of 20 mm and the PBT were mixed was obtained. The form of the reinforcing fibers in the random mat was observed. As a result, a fiber axis of the reinforcing fibers is nearly parallel to a plane, and the reinforcing fibers were arbitrarily dispersed in a plane. The Vf (volume fraction) of the random mat was 35%, and the fiber areal weight of the reinforcing fibers was 1,220 g/m$^2$.

The average fiber length (La) and the proportion of the reinforcing fiber bundle (A), of the random mat obtained, and the average number (N) of fibers were examined. As a result, the average fiber length (La) was 20 mm, the critical single fiber number defined by the formula (1) was 86, the proportion of the reinforcing fiber bundle (A) to the total amount of fibers of the mat was 35%, and the average number (N) of fibers in the reinforcing fiber bundle (A) was 240.

The random mat obtained was heated to 240°C using a press machine in which a flat plate mold for impregnation was set, pressurized under a pressure of 3 MPa for 7 minutes and then cooled to 80°C. Thus, a plate-shaped prepreg having a thickness of 2.0 mm was obtained. The void fraction of the prepreg was 0.02%.

Reference Example 6

A plate-shaped prepreg having a thickness of 1.5 mm was obtained in the same manner as in Reference Example 1 except that the carbon fibers were cut into a length of 16 mm and the amount of the carbon fibers supplied was 924 g/m$^2$. The void fraction of the prepreg was 0.02%.

Reference Example 7

A random mat was prepared in the same manner as in Reference Example 1 except that air was not blown to the carbon fibers in the taper tube (wind velocity: 0 m/sec).

The average fiber length (La) and the proportion of the reinforcing fiber bundle (A), of the random mat obtained, and the average number (N) of fibers were examined. As a result, the average fiber length (La) was 20 mm, the critical single fiber number defined by the formula (1) was 86, the proportion of the reinforcing fiber bundle (A) to the total amount of fibers of the mat was 100%, and the average number (N) of fibers in the reinforcing fiber bundle (A) was 24,000.

The random mat obtained was heated to 250°C using a press machine in which a flat plate mold for impregnation was set, pressurized under a pressure of 3 MPa for 7 minutes and then cooled to 80°C. Thus, a plate-shaped prepreg was obtained.

Example 1

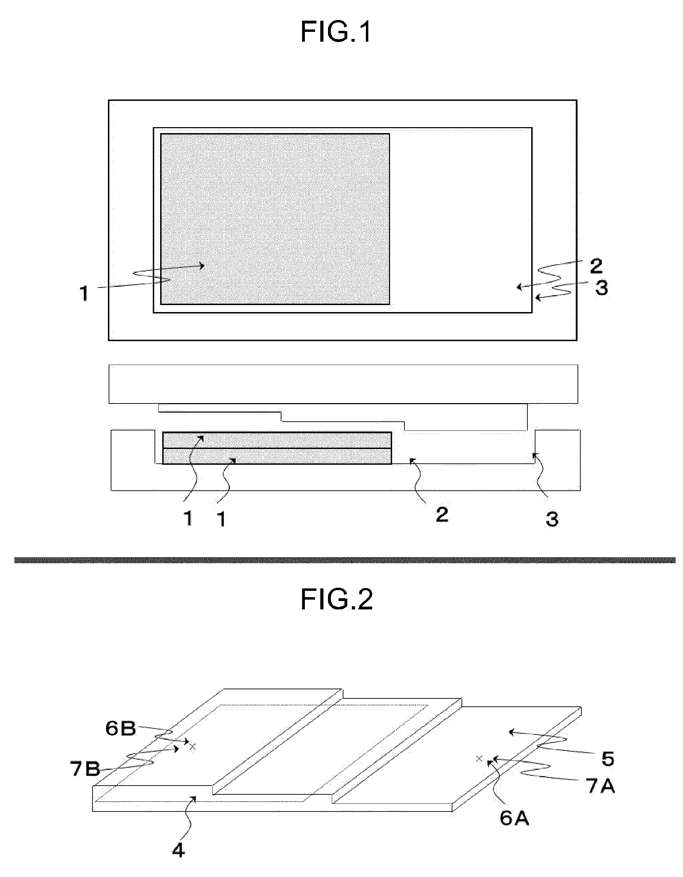

Two prepregs obtained in Reference Example 1 were cut in a charge rate of 60%, placed in an infrared oven, heated to 255°C and layered. The layered body was arranged in a mold having a difference in level adjusted to a temperature of 130°C (Fig. 1), and press molding was conducted under a pressure of 10 MPa for 30 seconds to obtain a molded product having a minimum thickness part of 1.9 mm and a maximum thickness part of 2.9 mm.

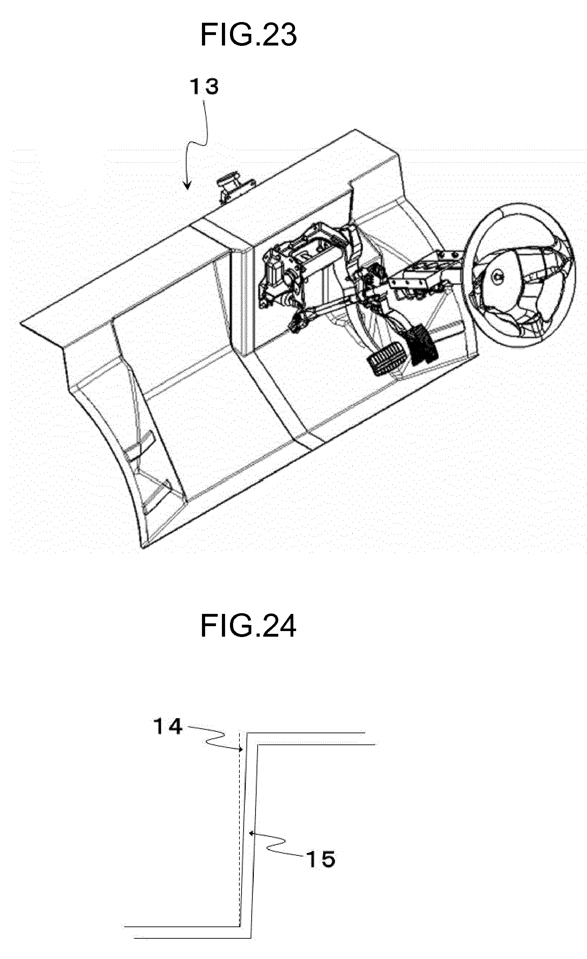

A schematic view of a share edge portion of the mold used is shown in Fig. 24. Share angle of the mold was 2°, and clearance of the share edge portion of the mold was 0.1 mm.

It could be confirmed by cross-section observation that the molded product obtained had no cracks of the material and no wrinkles, surface appearance was good, and warpage was not observed (Good), and furthermore, the resin and fibers filled to the end of the mold. A schematic view of the molded product obtained is shown in Fig. 2. The part shown by 4 is a charge part of a base material in a mold, and the outside part thereof shown by 5 is a fluidizing part obtained by fluidizing the base material to a cavity edge portion of the mold. Vf (fiber content) of a minimum thickness part 6A and a maximum thickness part 6B was examined. As a result, 6A was 34.6%, and 6B was 35.0%. Thus, those parts showed nearly the same value. Tensile modulus of a minimum thickness part 7A and a maximum thickness part 7B shown in the drawing was measured. As a result, a ratio ($E\delta$) obtained by dividing larger value by smaller value, of the values of tensile modulus measured in two directions perpendicular to each other, was 1.09 in the 7A part and 1.08 in the 7B part. Thus, it was confirmed that isotropy is maintained.

Example 2

A plate-shaped prepreg was obtained in the same manner as in Reference Example 1 except that the thickness was 0.5 mm. The void fraction of the prepreg was 0.10%.

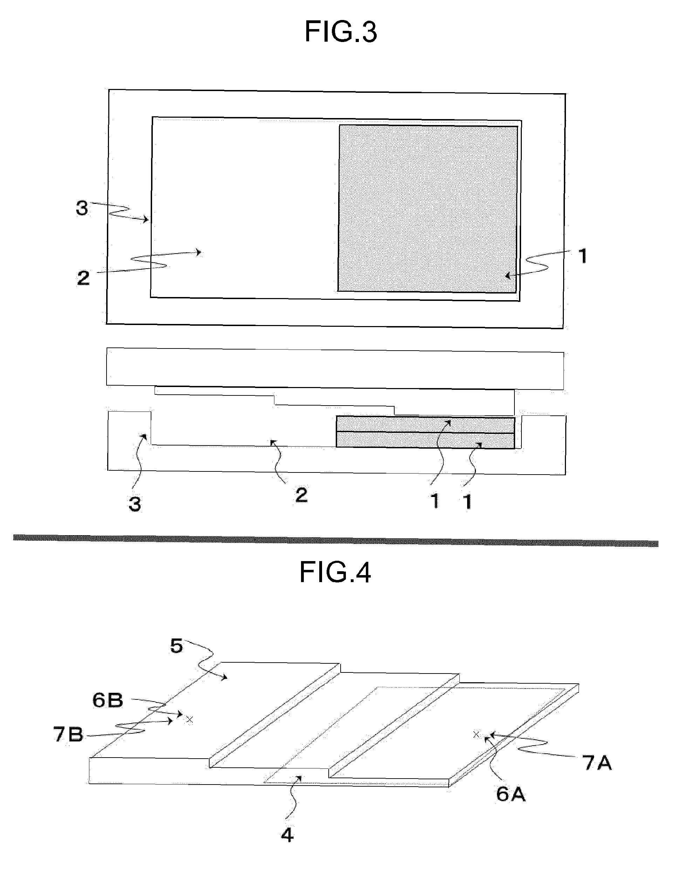

Eight prepregs cut in a charge rate of 50% were layered, placed in an infrared oven, and heated to 255°C. The resulting layered body was arranged in a mold having a difference in level shown in Fig. 3 adjusted to a temperature of 130°C and press molding was conducted under a pressure of 10 MPa for 30 seconds to obtain a molded product having a minimum thickness part of 2.1 mm and a maximum thickness part of 3.1 mm.

A schematic view of a share edge portion of the mold used is shown in Fig. 24. Share angle of the mold was 2°, and clearance of the share edge portion of the mold was 0.1 mm.

It could be confirmed by cross-section observation that the molded product obtained had no cracks of the material and no wrinkles, surface appearance was good, and warpage was not observed (Good), and the resin and fibers filled to the end of the mold. A schematic view of the molded product obtained is shown in Fig. 4. The part shown by 4 is a charge part of a base material in a mold, and the outside part thereof shown by 5 is a fluidizing part obtained by fluidizing the base material to a cavity edge portion of the mold. Vf of the minimum thickness part 6A and the maximum thickness part 6B shown in the drawing was examined, respectively. As a result, 6A was 35.8%, and 6B was 35.3%. Thus, those parts showed nearly the same value. Tensile modulus of the regions shown by the minimum thickness part 7A and the maximum thickness part 7B shown in the drawing was measured. As a result, a ratio (E$\delta$) obtained by dividing larger value by smaller value, of the values of tensile modulus measured in two directions perpendicular to each other, was 1.10 in 7A and 1.03 in 7B. Thus, it was confirmed that isotropy is maintained.


Example 3

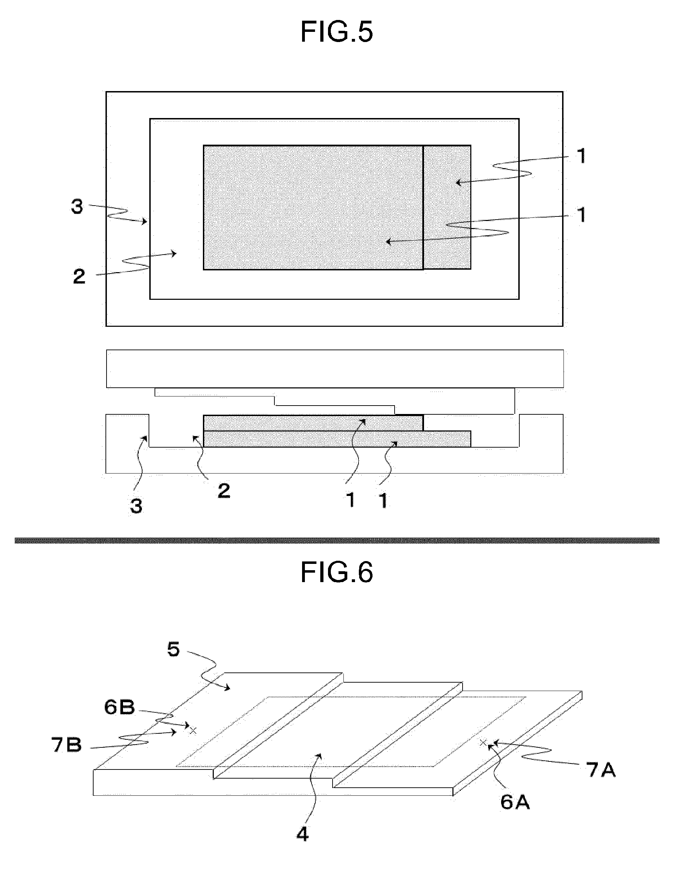

Carbon fiber TENAX (registered trademark) STS40-24KS (average fiber diameter: 7 $\mu$m, tensile strength: 4,000 MPa), manufactured by Toho Tenax Co., Ltd. was used as a reinforcing fiber. The carbon fibers were cut into a length of 20 mm, and were introduced in a taper tube in a feed rate of 1,232 g/min. Air was blown to the carbon fibers in the taper tube to partially open the fiber bundle, and at the same time the carbon fibers were sprayed on a table movable in XY direction provided at a lower part of a taper tube outlet while conducting suction from a lower part of the table by a blower. Polyamide 6 resin (A1030, manufactured by Unitika Ltd.) was supplied as a matrix resin to the taper tube in a rate of 1,482 g/min, and sprayed simultaneously with the carbon fibers. Thus, a random mat having a thickness of about 5.0 mm in which the carbon fibers having an average fiber length of 20 mm and the polyamide 6 were mixed was obtained. The proportion of the reinforcing fiber bundle and the average number (N) of fibers in the random mat obtained were examined. As a result, the critical single fiber number defined by the formula (1) was 86, the proportion of the reinforcing fiber bundle (A) to the total amount of fibers of the mat was 35%, and the average number (N) of fibers in the reinforcing fiber bundle (A) was 240.
One random mat obtained was arranged in a mold heated to 250°C in a proportion of a charge rate of 70%, one random mat was further arranged thereon in a proportion of 60%, that is, in a charge rate of 70%, and the resulting layered body was pressurized under 0.5 MPa. After holding for 10 minutes, the pressure was increased to 2.5 MPa over 10 seconds, following by further holding for 7 minutes. The mold temperature was cooled to 100°C over 1 minute using a cooling medium, and a molded product having a minimum thickness part of 0.8 mm and a maximum thickness part of 1.8 mm was obtained. The temperature of a mold was measured with a K-type thermocouple embedded in the vicinity of the surface of the mold.
A schematic view of a share edge portion of the mold used is shown in Fig. 24. Share angle of the mold was 2°, and clearance of the share edge portion of the mold was 0.1 mm.
It could be confirmed by cross-section observation that the molded product obtained had no cracks of the material and no wrinkles, surface appearance was good, and warpage was not observed (Good), and the resin and fibers filled to the end of the mold. A schematic view of the molded product obtained is shown in Fig. 6. The part shown by 4 is a charge part of a base material in a mold, and the outside part thereof shown by 5 is a fluidizing part obtained by fluidizing the base material to a cavity edge portion of the mold. Vf (fiber content) of a minimum thickness part 6A and a maximum thickness part 6B was examined, respectively. As a result, 6A was 35.0%, and 6B was 35.0%. Thus, those parts showed nearly the same value. Tensile modulus of a minimum thickness part 7A and a maximum thickness part 7B shown in the drawing was measured. As a result, a ratio (E$\delta$) obtained by dividing larger value by smaller value, of the values of tensile modulus measured in two directions perpendicular to each other, was 1.03 in the 7A part and 1.03 in the 7B part. Thus, it was confirmed that isotropy is maintained.


Example 4

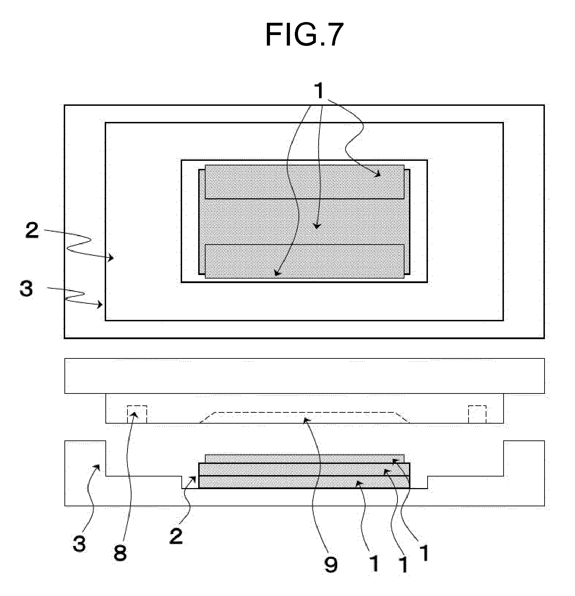

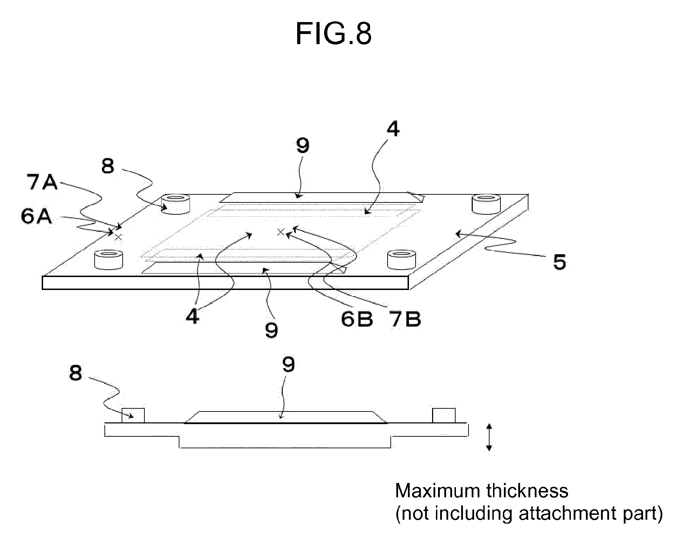

Two prepregs obtained in Reference Example 2 each having a charge rate of 50% were cut in a charge rate of 5%, placed in an infrared oven, and heated to 255°C. The two prepregs were layered such that a part or the whole of those is overlapped, that is, in a charge rate of 51 %, and the resulting layered body was placed in a flat plate-shaped mold adjusted to a temperature of 110°C (Fig. 7), and press molding was conducted under a pressure of 10 MPa for 30 seconds. A molded product having a minimum thickness part of 1.0 mm and a maximum thickness part of 2.0 mm was obtained.
A schematic view of a share edge portion of the mold used is shown in Fig. 24. Share angle of the mold was 2°, and clearance of the share edge portion of the mold was 0.1 mm.
It could be confirmed by cross-section observation that the molded product obtained had no cracks of the material and no wrinkles, surface appearance was good, and warpage was not observed (Good), and the resin and fibers filled to the end of the mold. A schematic view of the molded product obtained is shown in Fig. 8. The part shown by 4 is a charge part of a base material in a mold, and the outside part thereof shown by 5 is a fluidizing part obtained by fluidizing the base material to a cavity edge portion of the mold. Vf of a minimum thickness part 6A and a maximum thickness part 6B shown in the drawing was examined, respectively. As a result, 6A was 34.9%, and 6B was 35.0%. Thus, those parts showed nearly the same value. Tensile modulus of a minimum thickness part 7A and a maximum thickness part 7B shown in the drawing was measured. As a result, a ratio (Eδ) obtained by dividing larger value by smaller value, of the values of tensile modulus measured in two directions perpendicular to each other was 1.18 in the 7A part and 1.12 in the 7B part. Thus, it was confirmed that isotropy is maintained.

Example 5

Two prepregs obtained in Reference Example 3 were cut in a charge rate of 60%, placed in an infrared oven, and heated to 290°C. The resulting layered body was placed in a mold having a difference in level adjusted to a temperature of 130°C (Fig. 1), and press molding was conducted under a pressure of 10 MPa for 30 seconds. A molded product having a minimum thickness part of 1.9 mm and a maximum thickness part of 2.9 mm was obtained.

A schematic view of a share edge portion of the mold used is shown in Fig. 24. Share angle of the mold was 2°, and clearance of the share edge portion of the mold was 0.1 mm.

It could be confirmed by cross-section observation that the molded product obtained had no cracks of the material and no wrinkles, surface appearance was good, and warpage was not observed (Good), and the resin and fibers filled to the end of the mold. A schematic view of the molded product obtained is shown in Fig. 2. The part shown by 4 is a charge part of a base material in a mold, and the outside part thereof shown by 5 is a fluidizing part obtained by fluidizing the base material to a cavity edge portion of the mold. Vf (fiber content) of a minimum thickness part 6A and a maximum thickness part 6B shown in the drawing was examined, respectively. As a result, 6A was 35.0%, and 6B was 35.2%. Thus, those parts showed nearly the same value. Tensile modulus of a minimum thickness part 7A and a maximum thickness part 7B shown in the drawing was measured. As a result, a ratio (Eδ) obtained by dividing larger value by smaller value, of the values of tensile modulus measured in two directions perpendicular to each other, was 1.01 in the 7A part and 1.07 in the 7B part. Thus, it was confirmed that isotropy is maintained.

Example 6

Two prepregs obtained in Reference Example 4 were cut in a charge rate of 60%, placed in an infrared oven, and heated to 200°C. The resulting layered body was placed in a mold having a difference in level adjusted to a temperature of 80°C (Fig. 1), and press molding was conducted under a pressure of 10 MPa for 30 seconds. A molded product having a minimum thickness part of 1.9 mm and a maximum thickness part of 2.9 mm was obtained.

A schematic view of a share edge portion of the mold used is shown in Fig. 24. Share angle of the mold was 2°, and clearance of the share edge portion of the mold was 0.1 mm.

It could be confirmed by cross-section observation that the molded product obtained had no cracks of the material and no wrinkles, surface appearance was good, and warpage was not observed (Good), and the resin and fibers filled to the end of the mold. A schematic view of the molded product obtained is shown in Fig. 2. The part shown by 4 is a charge part of a base material in a mold, and the outside part thereof shown by 5 is a fluidizing part obtained by fluidizing the base material to a cavity edge portion of the mold. Vf (fiber content) of a minimum thickness part 6A and a maximum thickness part 6B shown in the drawing was examined, respectively. As a result, 6A was 34.8%, and 6B was 35.2%. Thus, those parts showed nearly the same value. Tensile modulus of a minimum thickness part 7A and a maximum thickness part 7B shown in the drawing was measured. As a result, a ratio (Eδ) obtained by dividing larger value by smaller value, of the values of tensile modulus measured in two directions perpendicular to each other, was 1.09 in the 7A part and 1.08 in the 7B part. Thus, it was confirmed that isotropy is maintained.

Example 7

Two prepregs obtained in Reference Example 5 were cut in a charge rate of 60%, placed in an infrared oven, and heated to 255°C. The resulting layered body was placed in a mold having a difference in level adjusted to a temperature of 130°C (Fig. 1), and press molding was conducted under a pressure of 10 MPa for 30 seconds. A molded product having a minimum thickness part of 1.9 mm and a maximum thickness part of 2.9 mm was obtained.

A schematic view of a share edge portion of the mold used is shown in Fig. 24. Share angle of the mold was 2°, and clearance of the share edge portion of the mold was 0.1 mm.

It could be confirmed by cross-section observation that the molded product obtained had no cracks of the material and no wrinkles, surface appearance was good, and warpage was not observed (Good), and the resin and fibers filled to the end of the mold. A schematic view of the molded product obtained is shown in Fig. 2. The part shown by 4 is a charge part of a base material in a mold, and the outside part thereof shown by 5 is a fluidizing part obtained by fluidizing the base material to a cavity edge portion of the mold. Vf (fiber content) of a minimum thickness part 6A and a maximum thickness part 6B shown in the drawing was examined, respectively. As a result, 6A was 34.9%, and 6B was 35.1%. Thus, those parts showed nearly the same value. Tensile modulus of a minimum thickness part 7A and a maximum thickness part 7B shown in the drawing was measured. As a result, a ratio (Eδ) obtained by dividing larger value by smaller value, of the values of tensile modulus measured in two directions perpendicular to each other, was 1.02 in the 7A part and 1.03 in the 7B part. Thus, it was confirmed that isotropy is maintained.

Example 8

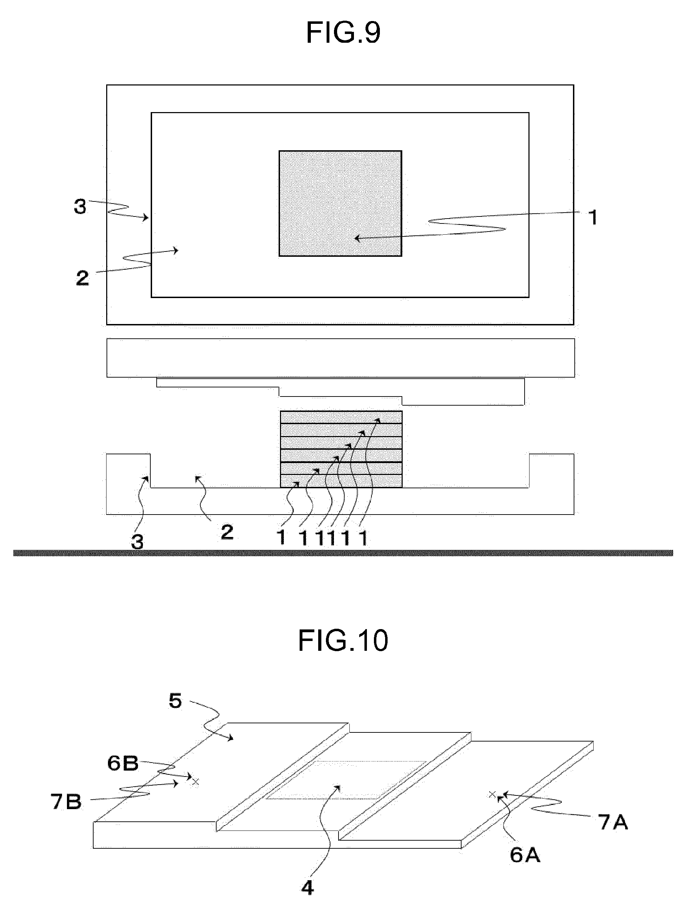

Six prepregs obtained in Reference Example 6 were cut in a charge rate of 11%, placed in an infrared oven, and heated to 255°C and those were layered. The resulting layered body was placed in a mold having a difference in level adjusted to a temperature of 130°C (Fig. 9), and press molding was conducted under a pressure of 20 MPa for 30 seconds. A molded product having a minimum thickness part of 0.5 mm and a maximum thickness part of 1.5 mm was obtained.

A schematic view of a share edge portion of the mold used is shown in Fig. 24. Share angle of the mold was 2°, and clearance of the share edge portion of the mold was 0.1 mm.

It could be confirmed by cross-section observation that the molded product obtained had no cracks of the material and no wrinkles, warpage was not observed, and the resin and fibers filled to the end of the mold. However, the surface appearance slightly lost luster (Fair). A schematic view of the molded product obtained is shown in Fig. 10. The part shown by 4 is a charge part of a base material in a mold, and the outside part thereof shown by 5 is a fluidizing part obtained by fluidizing the base material to a cavity edge portion of the mold. Vf (fiber content) of a minimum thickness part 6A and a maximum thickness part 6B shown in the drawing was examined, respectively. As a result, 6A was 35.5%, and 6B was 34.6%. Thus, those parts showed nearly the same value. Tensile modulus of a minimum thickness part 7A and a maximum thickness part 7B shown in the drawing was measured. As a result, a ratio (Eδ) obtained by dividing larger value by smaller value, of the values of tensile modulus measured in two directions perpendicular to each other, was 1.02 in the 7A part and 1.15 in the 7B part. Thus, it was confirmed that isotropy is maintained.

Example 9

One prepreg obtained in Reference Example 1 was cut in a charge rate of 100%, placed in an infrared oven, and heated to 255°C, followed by stacking. The layered body was placed in a mold having a difference in level adjusted to a temperature of 130°C (Fig. 11), and press molding was conducted under a pressure of 20 MPa for 30 seconds. A molded product having a minimum thickness part of 1.5 mm and a maximum thickness part of 2.5 mm was obtained.

A schematic view of a share edge portion of the mold used is shown in Fig. 24. Share angle of the mold was 2°, and clearance of the share edge portion of the mold was 0.1 mm.

It could be confirmed by cross-section observation that the molded product obtained had no cracks of the material and no wrinkles, surface appearance was good, and warpage was not observed (Good), and the resin and fibers filled to the end of the mold. A schematic view of the molded product obtained is shown in Fig. 12. The part shown by 4 is a charge part of a base material in a mold. In this example, the projected area of the mold cavity and the base material area are the same. The base material has a constant thickness, and the molded product obtained has thickness gradient as shown in Fig. 12. The part shown by 5 is a fluidizing part obtained by fluidizing in a draft direction of a molded product.

Vf (fiber content) of a minimum thickness part 6A and a maximum thickness part 6B shown in the drawing was examined, respectively. As a result, 6A was 34.9%, and 6B was 35.0%. Thus, those parts showed nearly the same value. Tensile modulus of a minimum thickness part 7A and a maximum thickness part 7B shown in the drawing was measured. As a result, a ratio (Eδ) obtained by dividing larger value by smaller value, of the values of tensile modulus measured in two directions perpendicular to each other, was 1.05 in the 7A part and 1.07 in the 7B part. Thus, it was confirmed that isotropy is maintained.

Example 10

One prepreg obtained in Reference Example 1 was cut in a charge rate of 125%, placed in an infrared oven, and heated to 255°C, followed by stacking. The layered body was placed in a mold having a difference in level adjusted to a temperature of 130°C (Fig. 13), and press molding was conducted under a pressure of 20 MPa for 30 seconds. A molded product having a minimum thickness part of 1.1 mm and a maximum thickness part of 2.1 mm was obtained.

A schematic view of a share edge portion of the mold used is shown in Fig. 24. Share angle of the mold was 2°, and clearance of the share edge portion of the mold was 0.1 mm.

It could be confirmed by cross-section observation that the molded product obtained had no cracks of the material and no wrinkles, surface appearance was good, and warpage was not observed (Good), and the resin and fibers filled to the end of the mold. A schematic view of the molded product obtained is shown in Fig. 14. The part shown by 4 is a charge part of a base material in a mold. In this example, the base material area is larger than the projected area of the mold cavity. The base material has a constant thickness, and the molded product obtained has thickness gradient as shown in Fig. 14. The part shown by 5 is a fluidizing part obtained by drawing the base material in the mold and then fluidizing in a draft direction of a molded product.

Vf (fiber content) of a minimum thickness part 6A and a maximum thickness part 6B shown in the drawing was examined, respectively. As a result, 6A was 35.2%, and 6B was 34.9%. Thus, those parts showed nearly the same value. Tensile modulus of a minimum thickness part 7A and a maximum thickness part 7B shown in the drawing was measured. As a result, a ratio (E$\delta$) obtained by dividing larger value by smaller value, of the values of tensile modulus measured in two directions perpendicular to each other, was 1.01 in the 7A part and 1.04 in the 7B part. Thus, it was confirmed that isotropy is maintained.

Example 11

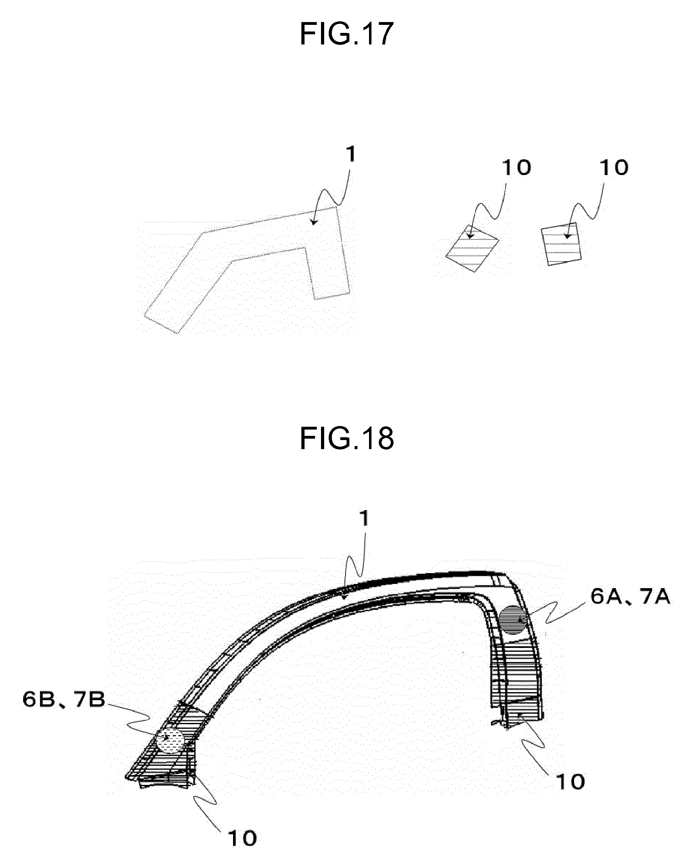

The prepreg obtained in Reference Example 6 was cut, and a partial material 10 shown in Fig. 17 was prepared. The prepreg and partial material thus obtained were placed in an infrared oven, and heated to 255°C. Those were layered such that the entire surface or a part of those are overlapped. The resulting layered body was placed in a mold adjusted to a temperature of 130°C and press molding was conducted under a pressure of 20 MPa for 60 seconds. A molded product having a minimum thickness part of 1.5 mm and a maximum thickness part of 3.0 mm was obtained.

It could be confirmed by cross-section observation that the molded product obtained had no cracks of the material and no wrinkles, surface appearance was good, and warpage was not observed (Good). A schematic view of the molded product obtained is shown in Fig. 18. Vf of a minimum thickness part 6A and a maximum thickness part 6B shown in the drawing was examined, respectively. As a result, 6A was 34.4%, and 6B was 34.8%. Thus, those parts showed the equal value. Tensile modulus of a minimum thickness part 7A and a maximum thickness part 7B shown in the drawing was measured. As a result, a ratio (E$\delta$) obtained by dividing larger value by smaller valuer, of the values of tensile modulus measured in two directions perpendicular to each other, was 1.01 in the 7A part and 1.00 in the 7B part. Thus, it was confirmed that isotropy is maintained.

The integrated molded product obtained is preferably used as a pillar for automobiles.

Example 12

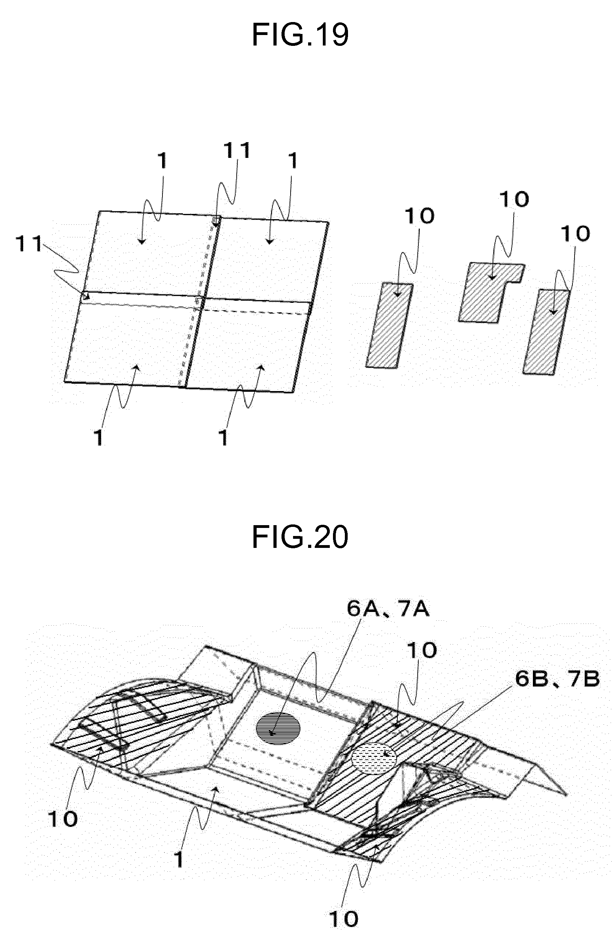

The prepreg obtained in Reference Example 6 was cut, and a partial material 10 shown in Fig. 19 was prepared. The prepreg and partial material thus obtained were placed in an infrared oven, and heated to 255°C. Those were layered such that the entire surface or a part of those are overlapped. The resulting layered body was placed in a mold adjusted to a temperature of 130°C and press molding was conducted under a pressure of 20 MPa for 60 seconds. A molded product having a minimum thickness part of 1.5 mm and a maximum thickness part of 3.0 mm was obtained.

The molded product obtained had no cracks of the material and no wrinkles, surface appearance thereof was good, and warpage thereof was not observed (Good). A schematic view of the molded product obtained is shown in Fig. 20. Vf of a minimum thickness part 6A and a maximum thickness part 6B shown in the drawing was examined, respectively. As a result, 6A was 35.0%, and 6B was 35.1%. Thus, those parts showed the equal value. Tensile modulus of a minimum thickness part 7A and a maximum thickness part 7B shown in the drawing was measured. As a result, a ratio (E$\delta$) obtained by dividing larger value by smaller value, of the values of tensile modulus measured in two directions perpendicular to each other, was 1.00 in the 7A part and 1.03 in the 7B part. Thus, it was confirmed that isotropy is maintained.

Example 13

The prepreg obtained in Reference Example 6 was cut, and a partial material 10 shown in Fig. 21 was prepared.

The prepreg and partial material obtained were placed in an infrared oven, and heated to 255°C. Those were layered such that the entire surface or a part of those are overlapped. The resulting layered body was placed in a mold adjusted to a temperature of 130°C and press molding was conducted under a pressure of 20 MPa for 60 seconds. A molded product having a minimum thickness part of 1.5 mm and a maximum thickness part of 3.0 mm was obtained.

The molded product obtained had no cracks of the material and no wrinkles, surface appearance thereof was good, and warpage thereof was not observed (Good). A schematic view of the molded product obtained is shown in Fig. 22. Vf of a minimum thickness part 6A and a maximum thickness part 6B shown in the drawing was examined, respectively. As a result, 6A was 34.6%, and 6B was 34.7%. Thus, those parts showed the equal value. Tensile modulus of a minimum thickness part 7A and a maximum thickness part 7B shown in the drawing was measured. As a result, a ratio (E$\delta$) obtained by dividing larger value by smaller value, of the values of tensile modulus measured in two directions perpendicular to each other, was 1.03 in the 7A part and 1.00 in the 7B part. Thus, it was confirmed that isotropy is maintained.

A view in which the integrated molded product obtained has been used in a dash board is shown in Fig. 23.

Comparative Example 1

A molded product having a minimum thickness part of 1.9 mm and a maximum thickness part of 2.9 mm was obtained in the same manner as in Example 1 except for using the random mat obtained in Reference Example 7. A schematic view of the molded product obtained is shown in Fig. 2.
The molded product obtained had no cracks of the material and no wrinkles, warpage thereof was not observed, and the resin filled to the end of the mold. However, reinforcing fibers were present in the form of a bundle in the molded product, and when light was emitted from the back to molded product, the light penetrated the molded product. The appearance evaluation was poor as compared with the molded product obtained in Example 1, and defects were observed (Poor). A schematic view of the molded product obtained is shown in Fig. 2. The part shown by 4 is a charge part of a base material in a mold, and the outside part thereof shown by 5 is a fluidizing part obtained by fluidizing the base material to a cavity edge portion of the mold. Vf (fiber content) of a minimum thickness part 6A and a maximum thickness part 6B shown in the drawing was examined, respectively. As a result, 6A was 34.9%, and 6B was 35.1%. Thus, those parts showed the equal value. Tensile modulus of a minimum thickness part 7A and a maximum thickness part 7B shown in the drawing was measured. As a result, a ratio (Eδ) obtained by dividing larger value by smaller value, of the values of tensile modulus measured in two directions perpendicular to each other, was 1.03 in the 7A part and 1.01 in the 7B part. Thus, it was confirmed that isotropy is maintained.

Industrial Applicability

The molded product containing reinforcing fibers and a thermoplastic resin obtained in the method of the present invention is a material that is lightweight, has the degree of freedom of a shape, may maintain isotropy of fibers to the end of the molded product, and has excellent moldability, small thickness, specific rigidity, productivity and economic efficiency. Therefore, the molded product may be utilized in electric and electronic parts such as parts for electric and electronic devices, parts for automobiles, personal computers, office automation equipments, audio-visual equipments, mobile phones, facsimiles, electric household appliances, and toy goods, and casings. In particular, the molded product may be preferably used in parts for automobiles mounted on environmentally-friendly vehicles.

**Claims**

1. A molded product, comprising a fiber-reinforced composite material containing reinforcing fibers having an average fiber length of 10 mm to 100 mm and a thermoplastic resin,
   wherein the molded product has thickness gradient,
   wherein an amount of the thermoplastic resin is 50 to 1,000 parts by weight per 100 parts by weight of the reinforcing fibers,
   wherein the reinforcing fibers contain a reinforcing fiber bundle (A) comprising the reinforcing fibers of a critical single fiber number defined by formula (1) or more, a ratio of the reinforcing fiber bundle (A) to a total amount of the reinforcing fibers is 30 vol% or more and less than 90 vol%:

$$\text{Critical single fiber number} = 600/D \qquad (1)$$

   wherein D is an average fiber diameter ($\mu$m) of single reinforcing fibers,
   wherein the reinforcing fibers have a fiber areal weight of from 25 g/m$^2$ to 3,000 g/m$^2$ and are substantially two-dimensionally randomly oriented,
   wherein the reinforcing fibers are carbon fibers,
   wherein an average number (N) of fibers in the reinforcing fiber bundle (A) satisfies formula (2):

$$0.7 \times 10^4/D^2 < N < 6 \times 10^4/D^2 \qquad (2)$$

   wherein D is an average fiber diameter ($\mu$m) of the reinforcing fibers, and
   wherein a ratio obtained by dividing larger value by smaller value, of reinforcing fiber volume fraction (Vf) in each region having different thickness, is 1.0 to 1.2.

2. The molded product according to claim 1, wherein a ratio of maximum thickness to minimum thickness is more than 1 and 10 or less.

3. The molded product according to claim 1 or 2, comprising a boss portion or a rib portion.

4. The molded product according to any one of claims 1 to 3, wherein the reinforcing fibers has an average fiber length of 10 mm to 50 mm.

5. The molded product according to any one of claims 1 to 4, wherein a ratio (Eδ) obtained by dividing larger value by smaller value, of values of tensile modulus in an arbitrary direction and a direction perpendicular to the arbitrary direction, is 1.0 to 1.3.

6. A method for manufacturing the molded product having thickness gradient according to claim 1, comprising either:

performing impregnation to molding, including steps A-1) to A-3) below, while using a random mat including the fiber-reinforced composite material containing the reinforcing fibers having an average fiber length of 10 mm to 100 mm and the thermoplastic resin, wherein the reinforcing fibers have a fiber areal weight of from 25 to 3,000 g/m$^2$ and are substantially two-dimensionally oriented, the reinforcing fibers contains a reinforcing fiber bundle (A) comprising the reinforcing fibers of the critical single fiber number defined by formula (1) or more, and a ratio of the reinforcing fiber bundle (A) to a total amount of the reinforcing fibers is 30 vol% or more and less than 90 vol%:

$$\text{Critical single fiber number} = 600/D \quad (1)$$

wherein D is an average fiber diameter (μm) of single reinforcing fibers, wherein the reinforcing fibers are carbon fibers, wherein an average number (N) of the reinforcing fibers in the reinforcing fiber bundle (A) satisfies formula (2):

$$0.7 \times 10^4/D^2 < N < 6 \times 10^4/D^2 \quad (2)$$

wherein D is an average fiber diameter (μm) of single reinforcing fibers. wherein

A-1) a prepreg is obtained by heating the random mat to a melting point or higher and lower than a decomposition temperature in a case where the thermoplastic resin is crystalline, or to a glass transition temperature or higher and lower than the decomposition temperature in a case where the thermoplastic resin is non-crystalline, and pressuring the random mat to impregnate the reinforcing fibers with the thermoplastic resin,
A-2) the prepreg obtained in A-1) is arranged in a mold having gradient in cavity thickness, the mold adjusted to a temperature lower than a melting point in the case where the thermoplastic resin is crystalline, or a temperature lower than a glass transition temperature in the case where the thermoplastic resin is non-crystalline,
A-3) the prepreg arranged in a mold in A-2) is pressurized and is molded; or
performing impregnation to molding, including steps B-1) to B-4) below, while using a random mat including the fiber-reinforced composite material containing the reinforcing fibers having an average fiber length of 5 mm to 100 mm and the thermoplastic resin, wherein
B-1) the random mat is arranged in a mold having gradient in cavity thickness,
B-2) the random mat is pressurized while rising a temperature to a temperature of a melting point or higher and lower than a thermal decomposition temperature of the thermoplastic resin in a case where the thermoplastic resin is crystalline, or to a temperature of a glass transition temperature or higher and lower than the thermal decomposition temperature of the thermoplastic resin in a case where the thermoplastic resin is non-crystalline (first pressing step),
B-3) the reinforcing fiber bundle is impregnated with the thermoplastic resin by pressurizing, in at least one stage, such that a pressure in a final stage is 1.2 times to 100 times a pressure in the first pressing step (second pressing step), and
B-4) the molding is completed by adjusting a mold temperature to a temperature lower than a melting point in the case where the thermoplastic resin is crystalline, or to a temperature lower than a glass transition temperature in the case where the thermoplastic resin is non-crystalline; and

wherein both methods further comprise molding by arranging the random mat and/or the prepreg such that a charge rate in formula (3) is 5% to 100%, and pressing:

$$\text{charge rate} = 100 \times \text{ base material area (mm}^2)/\text{mold cavity projected area (mm}^2). \quad (3)$$

7. The method for manufacturing the molded product according to claim 6, wherein the reinforcing fiber have an average fiber length of 10 mm to 50 mm.

8. The method for manufacturing the molded product according to claim 6, wherein a layered body of 2 to 100 prepregs is arranged in the mold in the A-2) method step.

9. The method for manufacturing the molded product according to claim 6, wherein a layered body of 2 to 100 prepregs is arranged in the mold in the B-1) method step.

**Patentansprüche**

1. Geformtes Produkt, umfassend ein faserverstärktes Verbundstoffmaterial, das verstärkende Fasern enthält, die eine durchschnittliche Faserlänge von 10 mm bis 100 mm aufweisen, und ein thermoplastisches Harz, wobei das geformte Produkt einen Dickegradienten aufweist, wobei eine Menge des thermoplastischen Harzes 50 bis 1.000 Gewichtsteile pro 100 Gewichtsteile der verstärkenden Fasern beträgt, wobei die verstärkenden Fasern ein verstärkendes Faserbündel (A) enthalten, das die verstärkenden Fasern einer kritischen, durch die Formel (1) definierten Einzelfaserzahl oder mehr umfasst, ein Verhältnis des verstärkenden Faserbündels (A) zu einer Gesamtmenge der verstärkenden Fasern 30 Vol.-% oder mehr und weniger als 90 Vol.-% beträgt:

$$\text{kritische Einzelfaserzahl} = 600/D \quad (1)$$

wobei D ein durchschnittlicher Faserdurchmesser ($\mu$m) einzelner verstärkender Fasern ist, wobei die verstärkenden Fasern ein Faserflächengewicht von 25 g/m$^2$ bis 3.000 g/m$^2$ aufweisen und im Wesentlichen zweidimensional wahllos orientiert sind, wobei die verstärkenden Fasern Kohlenstofffasern sind, wobei die durchschnittliche Anzahl (N) von Fasern in dem verstärkenden Faserbündel (A) der Formel (2) entspricht:

$$0{,}7 \times 10^4/D^2 < N < 6 \times 10^4/D^2 \quad (2)$$

wobei D ein durchschnittlicher Faserdurchmesser ($\mu$m) der verstärkenden Fasern ist und wobei ein Verhältnis, das durch Teilen des größeren Werts durch den kleineren Wert erhalten wird, der Volumenfraktion der verstärkenden Faser (Vf) in jeder Region, die eine verschiedene Dicke aufweist, 1,0 bis 1,2 beträgt.

2. Geformtes Produkt nach Anspruch 1, wobei ein Verhältnis der Höchstdicke zur Mindestdicke mehr als 1 und 10 oder weniger beträgt.

3. Geformtes Produkt nach Anspruch 1 oder 2, umfassend ein Auswölbungsteil oder ein Rippenteil.

4. Geformtes Produkt nach einem der Ansprüche 1 bis 3, wobei die verstärkenden Fasern eine durchschnittliche Faserlänge von 10 mm bis 50 mm aufweisen.

5. Geformtes Produkt nach einem der Ansprüche 1 bis 4, wobei ein Verhältnis (E$\delta$), das durch Teilen des größeren Werts durch den kleineren Wert erhalten wird, von Werten des Zugmoduls in einer willkürlichen Richtung und einer Richtung senkrecht zur willkürlichen Richtung 1,0 bis 1,3 beträgt.

6. Verfahren für die Herstellung des geformten Produkts, das den Dickegradienten Anspruch 1 entsprechend aufweist, umfassend entweder:

das Durchführen des Imprägnierens zum Formen, einschließlich der Schritte A-1) bis A-3) unten, während eine wahllose Matte verwendet wird, die das faserverstärkte Verbundstoffmaterial einschließt, das die verstärkenden Fasern, die eine durchschnittliche Faserlänge von 10 mm bis 100 mm aufweisen, und das thermoplastische Harz enthält, wobei die verstärkenden Fasern ein Faserflächengewicht von 25 bis 3.000 g/m$^2$ aufweisen und im Wesentlichen zweidimensional orientiert sind, die verstärkenden Fasern ein verstärkendes Faserbündel (A) enthalten, das die verstärkenden Fasern der kritischen Einzelfaserzahl, die durch die Formel (1) definiert ist, oder mehr umfasst, und ein Verhältnis des verstärkenden Faserbündels (A) zu einer Gesamtmenge der verstärkenden Fasern 30 Vol.-% oder mehr und weniger als 90 Vol.-% beträgt:

$$\text{kritische Einzelfaserzahl} = 600/D \quad (1)$$

wobei D ein durchschnittlicher Faserdurchmesser ($\mu$m) einzelner verstärkender Fasern ist, wobei die verstärkenden Fasern Kohlenstofffasern sind, wobei eine durchschnittliche Anzahl (N) der verstärkenden Fasern in dem verstärkenden Faserbündel (A) der Formel (2) entspricht:

$$0{,}7 \times 10^4/D^2 < N < 6 \times 10^4/D^2 \quad (2)$$

wobei D ein durchschnittlicher Faserdurchmesser ($\mu$m) einzelner verstärkender Fasern ist, wobei

A-1) ein Prepreg ist, das durch Erhitzen der wahllosen Matte auf einen Schmelzpunkt oder höher und niedriger als eine Zersetzungstemperatur in einem Fall, wo das thermoplastische Harz kristallin ist, oder auf eine Glasübergangstemperatur oder höher und niedriger als die Zersetzungstemperatur in einem Fall, wo das thermoplastische Harz nicht kristallin ist, und Unterdrucksetzen der wahllosen Matte zum Imprägnieren der verstärkenden Fasern mit dem thermoplastischen Harz erhalten wird,

A-2) das Prepreg, das in A-1) erhalten worden ist, in einer Form angeordnet wird, die einen Gradienten in Hohlraumdicke aufweist, wobei die Form auf eine Temperatur eingestellt wird, die niedriger ist als der Schmelzpunkt in dem Fall, wo das thermoplastische Harz kristallin ist oder eine Temperatur, die niedriger als die Glasübergangstemperatur ist in dem Fall, wo das thermoplastische Harz nicht kristallin ist,

A-3) das Prepreg, das in A-2) in einer Form angeordnet ist, unter Druck gesetzt und geformt wird;

oder das Durchführen des Imprägnierens zum Formen, einschließlich der Schritte B-1) bis B-4) unten, während eine wahllose Matte verwendet wird, die das faserverstärkte Verbundstoffmaterial enthält, das die verstärkenden Fasern, die eine durchschnittliche Faserlänge von 5 mm bis 100 mm aufweisen, und das thermoplastische Harz enthält, wobei

B-1) die wahllose Matte in einer Form angeordnet wird, die einen Gradienten in Hohlraumdicke aufweist,

B-2) die wahllose Matte unter Druck gesetzt wird, während eine Temperatur auf eine Temperatur eines Schmelzpunkts oder höher und niedriger als die thermische Zersetzungstemperatur des thermoplastischen Harzes in einem Fall erhöht wird, wo das thermoplastische Harz kristallin ist, oder auf eine Temperatur einer Glasübergangstemperatur oder höher und niedriger als die thermische Zersetzungstemperatur des thermoplastischen Harzes in einem Fall, wo das thermoplastische Harz nicht kristallin ist (erster Pressschritt),

B-3) das verstärkende Faserbündel mit dem thermoplastischen Harz durch Unterdrucksetzen in mindestens einer Stufe derart imprägniert wird, dass ein Druck in einer Endstufe das 1,2-Fache bis 100-Fache eines Drucks im ersten Pressschritt (zweiten Pressschritt) beträgt und

B-4) das Formen durch Einstellen einer Formtemperatur auf eine Temperatur niedriger als ein Schmelzpunkt in dem Fall, wo das thermoplastische Harz kristallin ist, oder auf eine Temperatur niedriger als eine Glasübergangstemperatur in dem Fall, wo das thermoplastische Harz nicht kristallin ist, abgeschlossen wird; und

wobei beide Verfahren ferner das Formen durch Anordnen der wahllosen Matte und/oder des Prepregs derart, dass eine Belastungsrate in der Formel (3) 5 % bis 100 % beträgt, und Pressen umfassen:

$$\text{Belastungsrate} = 100 \times \text{Basismaterialbereich} \ (mm^2) / \text{projizierter Formhohlraumbereich} \ (mm^2). \ (3)$$

7. Verfahren für die Herstellung des geformten Produkts nach Anspruch 6, wobei die verstärkende Faser eine durchschnittliche Faserlänge von 10 mm bis 50 mm aufweist.

8. Verfahren für die Herstellung des geformten Produkts nach Anspruch 6, wobei ein schichtförmiger Körper von 2 bis 100 Prepregs in der Form im A-2)-Verfahrensschritt angeordnet ist.

9. Verfahren für die Herstellung des geformten Produkts nach Anspruch 6, wobei ein schichtförmiger Körper von 2 bis 100 Prepregs in der Form im B-1)-Verfahrensschritt angeordnet ist.

**Revendications**

1. Produit moulé, comprenant un matériau composite renforcé par des fibres contenant des fibres de renforcement ayant une longueur moyenne de fibre de 10 millimètres à 100 millimètres et une résine thermoplastique,
le produit moulé présentant un gradient d'épaisseur,
une quantité de la résine thermoplastique étant de 50 à 1 000 parties en poids par 100 parties en poids des fibres de renforcement,
les fibres de renforcement contenant un faisceau de fibres de renforcement (A) comprenant les fibres de renforcement dans un nombre critique de fibres individuelles défini par la formule (1) ou plus, un rapport du faisceau de fibres de renforcement (A) contre une quantité totale des fibres de renforcement étant de 30 % en volume ou plus et de moins de 90 % en volume :

$$\text{Nombre critique de fibres individuelles} = 600/D \quad (1)$$

où D est un diamètre moyen de fibre ($\mu$m) des fibres de renforcement individuelles,
les fibres de renforcement ayant un poids surfacique de fibre de 25 g/m$^2$ à 3 000 g/m$^2$ et étant orientées sensiblement de façon aléatoire en deux dimensions,
les fibres de renforcement étant des fibres de carbone,
un nombre moyen (N) de fibres dans le faisceau de fibres de renforcement (A) étant conforme à la Formule (2) :

$$0{,}7 \times 10^4/D^2 < N < 6 \times 10^4/D^2 \quad (2)$$

où D est un diamètre moyen de fibre ($\mu$m) des fibres de renforcement, et
dans lequel un rapport obtenu en divisant une valeur plus grande par une valeur plus petite, de la fraction volumique (Vf) des fibres de renforcement dans chaque région ayant une différente épaisseur, est de 1,0 à 1,2.

2. Produit moulé selon la revendication 1, dans lequel un rapport de l'épaisseur maximum contre l'épaisseur minimum est de plus de 1 et de 10 ou moins.

3. Produit moulé selon la revendication 1 ou 2, comprenant une partie formant un bossage ou une partie formant une nervure.

4. Produit moulé selon l'une quelconque des revendications 1 à 3, dans lequel les fibres de renforcement ont une longueur moyenne de fibre de 10 millimètres à 50 millimètres.

5. Produit moulé selon l'une quelconque des revendications 1 à 4, dans lequel un rapport (E$_Q$) obtenu en divisant une valeur plus grande par une valeur plus petite, des valeurs du module en traction dans une direction arbitraire et dans une direction perpendiculaire à la direction arbitraire, est de 1,0 à 1, 3.

6. Procédé de fabrication du produit moulé présentant un gradient d'épaisseur selon la revendication 1, comprenant :

la réalisation d'un moulage par imprégnation, comprenant les étapes A-1) à A-3) ci-dessous, en utilisant un mat aléatoire comprenant le matériau composite renforcé par des fibres contenant les fibres de renforcement ayant une longueur moyenne de fibre de 10 millimètres à 100 millimètres et la résine thermoplastique, les fibres de renforcement ayant un poids surfacique de fibre de 25 à 3 000 g/m$^2$ et étant orientées sensiblement de façon aléatoire en deux dimensions, les fibres de renforcement contenant un faisceau de fibres de renforcement (A) comprenant les fibres de renforcement dans le nombre critique de fibres individuelles défini par la formule (1) ou plus, et un rapport du faisceau de fibres de renforcement (A) contre une quantité totale des fibres de renforcement étant de 30 % en volume ou plus et de moins de 90 % en volume :

$$\text{Nombre critique de fibres individuelles} = 600/D \quad (1)$$

où D est un diamètre moyen de fibre ($\mu$m) des fibres de renforcement individuelles, les fibres de renforcement étant des fibres de carbone, un nombre moyen (N) des fibres de renforcement dans le faisceau de fibres de renforcement (A) étant conforme à la Formule (2) :

$$0,7 \ \times 10^4/D^2 < N < 6 \ \times 10^4/D^2 \quad (2)$$

où D est un diamètre moyen de fibre ($\mu$m) des fibres de renforcement individuelles, dans lequel

A-1) un matériau préimprégné est obtenu en chauffant le mat aléatoire jusqu'à un point de fusion ou à une température supérieure, et à une température inférieure à une température de décomposition dans le cas où la résine thermoplastique est cristalline, ou jusqu'à une température de transition vitreuse ou à une température supérieure, et à une température inférieure à la température de décomposition dans le cas où la résine thermoplastique est non cristalline, et en exerçant une pression sur le mat aléatoire pour imprégner les fibres de renforcement de la résine thermoplastique,

A-2) le matériau préimprégné obtenu à l'étape A-1) est disposé dans un moule présentant un gradient d'épaisseur de cavité, le moule étant réglé sur une température inférieure à un point de fusion dans le cas où la résine thermoplastique est cristalline, ou sur une température inférieure à une température de transition vitreuse dans le cas où la résine thermoplastique est non cristalline,

A-3) le matériau préimprégné disposé dans un moule à l'étape A-2) est soumis à une pression et est moulé ; ou

la réalisation d'un moulage par imprégnation, comprenant les étapes B-1) à B-4) ci-dessous, en utilisant un mat aléatoire comprenant le matériau composite renforcé par des fibres contenant les fibres de renforcement ayant une longueur moyenne de fibre de 5 millimètres à 100 millimètres et la résine thermoplastique, dans lequel

B-1) le mat aléatoire est disposé dans un moule présentant un gradient d'épaisseur de cavité,

B-2) le mat aléatoire est soumis à une pression avec simultanément une augmentation de la température jusqu'à une température correspondant à un point de fusion ou à une température supérieure, et à une température inférieure à une température de décomposition thermique de la résine thermoplastique dans le cas où la résine thermoplastique est cristalline, ou jusqu'à une température correspondant à une température de transition vitreuse ou à une température supérieure, et à une température inférieure à la température de décomposition thermique de la résine thermoplastique dans le cas où la résine thermoplastique est non cristalline (première étape de pressage),

B-3) le faisceau de fibres de renforcement est imprégné de la résine thermoplastique par pressage, dans au moins une étape, de telle sorte qu'une pression à une étape finale soit de 1,2 fois à 100 fois une pression dans la première étape de pressage (deuxième étape de pressage), et

B-4) le moulage est réalisé en réglant une température du moule sur une température inférieure à un point de fusion dans le cas où la résine thermoplastique est cristalline, ou sur une température inférieure à une température de transition vitreuse dans le cas où la résine thermoplastique est non cristalline ; et

les deux procédés comprenant en outre un moulage par disposition du mat aléatoire et/ou du matériau préimprégné de telle sorte qu'un taux de charge dans la Formule (3) soit de 5 % à 100 %, et pressage :

$$\text{taux de charge} = 100 \ \times \text{surface du matériau de base}$$
$$(\text{mm}^2)/\text{surface projetée de la cavité du moule (mm}^2) \ (3)$$

7. Procédé de fabrication du produit moulé selon la revendication 6, dans lequel la fibre de renforcement a une longueur moyenne de fibre de 10 millimètres à 50 millimètres.

8. Procédé de fabrication du produit moulé selon la revendication 6, dans lequel un corps stratifié constitué de 2 à 100 matériaux préimprégnés est disposé dans le moule à l'étape A-2) du procédé.

9. Procédé de fabrication du produit moulé selon la revendication 6, dans lequel un corps stratifié constitué de 2 à 100 matériaux préimprégnés est disposé dans le moule à l'étape B-1) du procédé.

# FIG.1

# FIG.2

# FIG.3

3

2

1

3    2    1  1

# FIG.4

5

6B

7B

7A

6A

4

# FIG.5

# FIG.6

# FIG.7

# FIG.8

Maximum thickness
(not including attachment part)

# FIG.9

# FIG.10

# FIG.11

# FIG.12

# FIG.13

# FIG.14

# FIG.15

# FIG.16

# FIG.17

1

10          10

# FIG.18

1

6A、7A

6B、7B

10

10

## FIG.19

## FIG.20

# FIG.21

# FIG.22

# FIG.23

13

# FIG.24

14

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002067070 A
- JP 10193350 A
- JP 2010253938 A
- EP 2682418 A1
- EP 2716433 A1
- EP 1927618 A1

### Non-patent literature cited in the description

- Characterisation of random carbon fibre composites from a directed fibre preforming process: The effect of fibre length. **HARPER L T et al.** COMPOSITES PART A: APPLIED SCIENCE AND MANUFACTURING. ELSEVIER SCIENCE PUBLISHERS, 01 November 2006, vol. 37, 1863-1878
- Characterisation of random carbon fibre composites from a directed fibre preforming process: The effect of tow filamentisation. **HARPER et al.** COMPOSITES PART A: APPLIED SCIENCE AND MANUFACTURING. ELSEVIER SCIENCE PUBLISHERS, 15 December 2006, vol. 38, 755-770